# EUROPÄISCHE PATENTSCHRIFT

(11) **EP 3 131 962 B1**
(45) Veröffentlichungstag und Bekanntmachung des Hinweises auf die Patenterteilung: **18.04.2018**
(21) Anmeldenummer: 15705201.0
(22) Anmeldetag: 11.02.2015
(51) Int. Cl.: C08K 5/20, C08K 5/21, C08L 77/06, C09D 5/04, C09D 7/12, C08K 3/16, C08K 3/24, C08K 3/28, C08K 5/098

(54) **KOMPOSITION ZUR RHEOLOGIESTEUERUNG**
COMPOSITION FOR RHEOLOGY CONTROL
COMPOSITION DE COMMANDE RHÉOLOGIQUE

(30) Priorität: 15.04.2014 EP 14001367
(43) Veröffentlichungstag der Anmeldung: 22.02.2017
(73) Patentinhaber: BYK-Chemie GmbH, 46483 Wesel (DE)
(72) Erfinder: LEUTFELD, Daniela, 46485 Wesel (DE); EBERHARDT, Marc, 46485 Wesel (DE); NAGELSDIEK, René, 46499 Hamminkeln (DE); BUEHNE, Sylvia, 47198 Duisburg (DE); OMEIS, Jürgen, 46286 Dorsten-Lembeck (DE); RUDNER, Jasmin, 46539 Dinslaken (DE)
(74) Vertreter: Arlt, Klaus
(86) Internationale Anmeldenummer: PCT/EP2015/000300
(87) Internationale Veröffentlichungsnummer: WO 2015/158407

(56) Entgegenhaltungen:
- WO-A1-2011/091812
- DATABASE CA [Online] CHEMICAL ABSTRACTS SERVICE, COLUMBUS, OHIO, US; 11. Dezember 2008 (2008-12-11), YAMADA, AKIRA ET AL: "Water-thinned ink compositions with good dry-up resistance and retractable ball-point pens containing them", XP002728935, gefunden im STN Database accession no. 2008:1481528 -& JP 2008 297544 A (PILOT INK CO LTD) 11. Dezember 2008 (2008-12-11)

## Beschreibung

Die vorliegende Erfindung betrifft eine Komposition sowie deren Verwendung und eine die Komposition enthaltende Zubereitung.

Um die Rheologie von flüssigen Systemen, insbesondere flüssigen Beschichtungssystemen, zu steuern, werden als rheologische Hilfstoffe vorwiegend organisch modifizierte Bentonite, Kieselsäuren, hydriertes Rizinusöl und Polyamidwachse eingesetzt.

Nachteilig am Einsatz dieser rheologischen Hilfsstoffe ist, dass diese meist in Form von trockenen Feststoffen vorliegen. Folglich werden deshalb besagte rheologische Hilfsstoffe vor dem Einsatz unter Verwendung von Lösemitteln und Scherkräften erst einmal zu einem Halbfabrikat aufgeschlossen. Alternativ können die noch nicht aufgeschlossenen rheologischen Hilfsstoffe auch so eingesetzt werden, dass diese durch gezielte Temperatursteuerung in das flüssige Beschichtungssystem eingebracht werden. Erfolgt diese Temperatursteuerung nicht gemäß den Zielvorgaben, so treten im fertigen Beschichtungssystem typischerweise Kristallite auf, die zu Fehlern in der Beschichtung führen können.

Ein genereller Nachteil des Einsatzes dieser rheologischen Hilfsstoffe ist, dass diese Trübungen und Schleierbildungen (Haze) in klaren, transparenten Beschichtungen verursachen. Außerdem ist der Umgang mit trockenen, pulverförmigen Produkten, die Stäube bei der Verarbeitung verursachen können, unerwünscht.

Eine flüssige Anwendungsalternative zu diesen festen Rheologiesteuerungsmitteln stellen Lösungen von speziellen Harnstoffverbindungen dar. Derartige Lösungen werden häufig in der Praxis eingesetzt und sind beispielsweise in der EP-A-1 188 779 beschrieben. Als Lösemittel bzw. Trägermedium dienen typischerweise polare/ aprotische Lösemittel und/ oder sog. ionische Flüssigkeiten, bei denen es sich de facto um Salzschmelzen handelt, welche bei moderaten Temperaturbedingungen (meist unter 80°C, im Idealfall bei Raumtemperatur) flüssig sind. Die rheologiesteuernden Eigenschaften gelöster Harnstoffverbindungen sind meist zwar recht gut, wobei jedoch in vielen Fällen der Wunsch nach einem noch weiter optimierten rheologiesteuernden Verhalten besteht. Ein optimiertes Verhalten äußert sich häufig nicht nur in verbesserter rheologischer Wirksamkeit, sondern ggf. auch in einer breiten Verträglichkeit in anwendungsrelevanten Formulierungen (z.B. Bindemitteln).

Die WO2011/091812 betrifft den Einsatz von Harnstoff- sowie Amidverbindungen als rheologisch wirksame Komponenten in Einbrennlacken. Nachteilig ist, dass die besagten Harnstoff- sowie Amidverbindungen aufgrund gegenseitiger Unverträglichkeit getrennt voneinander dem Einbrennlack zudosiert werden müssen und deshalb nicht als Additivmischung dem Lackhersteller zur Verfügung stehen.

Somit ist die Aufgabe der vorliegenden Erfindung die Bereitstellung eines universell und praktisch einsetzbaren sowie qualitativ hochwertigen Rheologiesteuerungsmittels.

Die Lösung dieser Aufgabe ist eine Komposition enthaltend
i) 15 - 95 Gew.-% einer Amidverbindung (A),
ii) 5 - 75 Gew.-% einer Harnstoffverbindung (B),
iii) 0 - 50 Gew.-% einer ionogenen Verbindung (C) und
iv) 0 - 35 Gew.-% eines organischen Lösemittels (D),
wobei die Amidverbindung (A) eine molare Masse von 70 bis 600 g/mol aufweist, die Amidverbindung (A) maximal eine Amidgruppe enthält, an deren Stickstoffatom Wasserstoff gebunden ist, die Amidverbindung (A) keine Harnstoffgruppe, kein Phosphor, kein Silizium sowie kein Halogen aufweist und die Amidverbindung (A) gemäß der allgemeinen Formel (I) vorliegt, 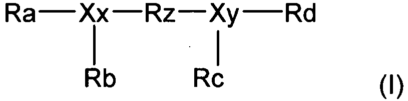 mit
Xx gleich oder verschieden sowie repräsentiert durch eine Amidgruppe C(=O)-N, die mit Rz, Ra und Rb verknüpft ist gemäß einer der allgemeinen Formeln RzC(=O)-NRaRb (Xx1), RaC(=O)-NRzRb (Xx2) sowie RbC(=O)-NRzRa (Xx3)
Xy gleich oder verschieden sowie repräsentiert durch eine Amidgruppe C(=O)-N, die mit Rz, Rc und Rd verknüpft ist gemäß einer der allgemeinen Formeln RzC(=O)-NRcRd (Xy1), RcC(=O)-NRzRd (Xy2) sowie RdC(=O)-NRzRc (Xy3)
Rz jeweils gleich oder verschieden sowie repräsentiert durch einen verzweigten oder unverzweigten, gesättigten oder ungesättigten, 1 bis 32 Kohlenstoffatome aufweisenden Kohlenwasserstoffrest, welcher als Heteroatome enthaltende Gruppen ausschließlich Amino- und/oder Amidgruppen enthalten kann,
Ra, Rb, Rc, Rd, jeweils gleich oder verschieden sowie jeweils unabhängig voneinander repräsentiert durch Wasserstoff und/ oder einen verzweigten oder unverzweigten, gesättigten oder ungesättigten, 1 bis 16 Kohlenstoffatome enthaltenden organischen Rest und zwar mit der Maßgabe, dass
Ra, Rb, Rc und Rd in der Gesamtheit mindestens 4 Kohlenstoffatome aufweisen,
maximal einer der Reste aus der Gruppe Ra, Rb, Rc und Rd in Form von Wasserstoff vorliegt,
Ra und Rb und/oder Rc mit Rd zusammen mit der Ra mit Rb und/ oder Rc mit Rd verbindenden Gruppierung CO-N gemäß der allgemeinen Formel (*α*-*1)* gemeinsam einen Zyklus mit 4 bis 10 Ringatomen ausbilden können und/ oder 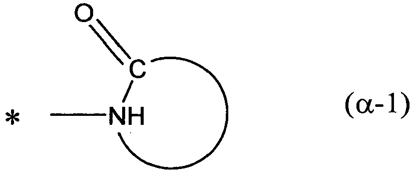
Ra und Rb und/oder Rc mit Rd zusammen mit dem Ra mit Rb und/ oder Rc mit Rd verbindenden N-Atom gemäß der allgemeinen Formel *(β-1)* gemeinsam einen Zyklus mit 4 bis 7 Ringatomen ausbilden können oder 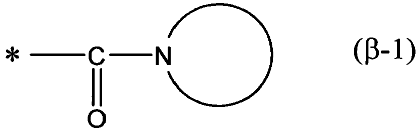
Rb und Rc zusammen mit dem jeweils an Rb und Rc gebundenen N-Atom sowie dem Rest Rz gemäß der allgemeinen Formel (*γ-1*) einen Zyklus mit 5 bis 7 Ringatomen ausbilden können 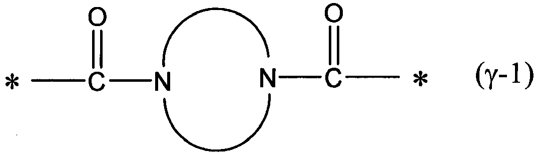
Ra, Rb, Rc, Rd und Rz in der Gesamtheit maximal 36 Kohlenstoffatome sowie maximal 8 Heteroatome aus der Gruppe N und O aufweisen,
die Harnstoffverbindung (B) ein Molekulargewicht von wenigstens 350 g/mol sowie mindestens eine Harnstoffgruppe aufweist,
die ionogene Verbindung (C) eine kationische sowie eine anionische Komponente enthält und sich von der Amidverbindung (A) sowie von der Harnstoffverbindung (B) unterscheidet und
das organische Lösemittel (D) keine Harnstoffgruppe sowie keine ionische Gruppe enthält sowie maximal zwei Heteroatome ausgewählt aus der Gruppe bestehend aus Stickstoff und Sauerstoff, aufweist.

Die Komponenten (A), (B), (C) und/oder (D) können jeweils in Form von verschiedenartigen Spezies, d.h. als Mischungen, vorliegen. Die erfindungsgemäße Komposition kann neben den Komponenten (A), (B), (C) und (D) ggf. auch noch weitere Bestandteile enthalten.

Das Molekulargewicht der erfindungsgemäß relevanten Harnstoffverbindungen (B) ist im niedermolekularen Bereich dadurch beschränkt, dass Harnstoffverbindungen (B) mit Molmassen von weniger als 350 g/mol in der Regel rheologisch weniger wirksam oder gar rheologisch unwirksam sind. Bei solchen wenig oder unwirksamen Substanzen mit Molekulargewichten unterhalb 350 g/mol handelt es sich üblicherweise um konkrete monomere oder niedermolekulare oligomere Verbindungen mit definiertem Molekulargewicht, so dass sich die Angabe eines gewichts- oder zahlenmittleren Molekulargewicht erübrigt, da diese Verbindungen in der Regel keine molekulare Uneinheitlichkeit aufweisen. Die anspruchsgemäß gewählte Untergrenze von 350 g/mol stellt somit das tatsächliche Molekulargewicht der Spezies dar und ist beispielweise mittels NMR ermittelbar.

Die Obergrenze des Molekulargewichts der Harnstoffverbindungen (B) ist hingegen unkritisch, solange noch eine Verträglichkeit der Harnstoffverbindungen (B) mit den weiteren Bestandteilen des Rheologiesteuerungsmittels und der späteren Zubereitung, in welcher die Harnstoffverbindungen (B) eingesetzt werden, gegeben ist. Die typischen Verträglichkeitsgrenzen werden üblicherweise von polymeren Harnstoffverbindungen (B) erreicht, für die nur gemittelte Molekulargewichte angegeben werden können. Üblicherweise geeignet sind als Harnstoffverbindungen (B) solche, die ein gewichtsmittleres Molekulargewicht von weniger als 60000 g/mol besitzen, wobei im Einzelfall aber auch Harnstoffverbindungen eingesetzt werden können, die ein höheres Molekulargewicht aufweisen, wie beispielsweise 80000 oder 100000 g/mol, solange die Verträglichkeit in den entsprechenden Systemen gewährleistet ist. Der Durchschnittsfachmann ist bei mangelnder Verträglichkeit ohne weiteres in der Lage, auf Harnstoffverbindungen (B) zurückzugreifen, die ein niedrigeres gewichtsmittleres Molekulargewicht aufweisen. Die Synthese von Harnstoffverbindungen (B) mit gewichtsmittleren Molekulargewichten, auch von weit mehr als 100000 g/mol, stellt indes für den Durchschnittsfachmann kein generelles Problem dar.

Dem Durchschnittsfachmann ist bekannt, dass für höhere Molekulargewichtsbereiche anstelle der NMR-Spektrokopie zur Bestimmung der Molekulargewichte anderen Verfahren der Vorzug zu geben ist. Die Bestimmung des gewichtsmittleren Molekulargewichts der Harnstoffverbindungen (B), die eine molare Masse von mehr als 1000 g/mol aufweisen, erfolgt, entsprechend der nachstehenden Beschreibung, als das Gewichtsmittel der mittels Gelpermeationschromatographie (GPC) bestimmten Molmassenverteilung. Die GPC-Molmassenverteilung wird gemäß DIN 55672 Teil 2 vom Januar 2008 bestimmt. Als Eluent wird eine Lösung von Lithiumbromid (Gehalt 5 g/l) in Dimethylacetamid verwendet. Zur Kalibrierung werden eng verteilte, linear aufgebaute Polymethylmethacrylat-Standards mit Molekulargewichten zwischen 1000000 und 102 g/mol verwendet. Die Temperatur des gesamten GPC-Systems (Injektor, Probenteller, Detektoren und Säulen) beträgt 80°C. Die gewichtsmittleren Molmassen der Harnstoffverbindungen (B) mit 350 g/mol bis zu etwa 1000 g/mol lassen sich beispielsweise mittels NMR ermitteln, (B) indem die Integrale betreffender NMR-Resonanzsignale ins Verhältnis gesetzt werden. Die Wahl des Bestimmungsverfahren in diesem Bereich ist indes unkritisch, da erfindungsgemäß lediglich gewährleistet sein sollte, dass die Harnstoffverbindungen (B) - wie oben erklärt - ein Molekulargewicht von wenigstens 350 g/mol aufweisen.

In einer besonders bevorzugten Ausführungsform der Erfindung weist somit 70 bis 100 Gew.-% der Harnstoffverbindung (B) ein Molekulargewicht von wenigstens 350 g/mol bis maximal 60000 g/mol auf.

Die erfindungsgemäße Komposition ist eine anwendungsfreundliche Darreichungsform, welche in flüssiger Form bereitgestellt werden kann. Der Endanwender (z.B. Anwender bzw. Formulierer von Lacken, Kunststoffen oder Klebstoffen) kann das Additiv einfach und mit geringer Gefahr von Anwendungsfehlern einsetzen. Die Tatsache, dass die rheologisch wirksamen Additivkomponenten (A) und (B) in Mischung vorliegen, verringert den Lageraufwand für den Lackanwender (nur noch ein Lagerbehältnis für (A) und (B)) und ermöglicht eine Beschleunigung der Lackherstellung, denn es müssen weniger Komponenten zudosiert werden. Hervorzuheben ist die gute Lagerstabilität der erfindungsgemäßen Komposition und die universelle Anwendbarkeit in verschiedenen Systemen (z.B. in Bindemitteln unterschiedlicher Art).

Die erfindungsgemäße Komposition zeigt eine besonders gute rheologische Wirksamkeit. Beispielsweise kann die rheologische Wirksamkeit der Komposition anhand des Standvermögens (Ablaufgrenze) oder der Gelstärke einer entsprechenden Lackformulierung ermittelt werden. Weiterhin zeigt die erfindungsgemäße Komposition eine breite Verträglichkeit (Kriterium: z.B. Stippen-, Schleier-, und/ oder Trübungsbildung in der Formulierung) in anwendungsrelevanten Formulierungen (z.B. Bindemitteln).

Maßgeblich an der rheologischen Leistungsfähigkeit bzw. der Eignung als Rheologiesteuerungsmittel ist das Zusammenwirken zweier rheologisch aktiver Wirkstoffe, nämlich der Amidverbindung (A) und der Harnstoffverbindung (B).

Neben den vorstehend beschriebenen Komponenten (A), (B), (C) und (D) können in der erfindungsgemäßen Komposition auch Komponenten enthalten sein, die von diesen jeweils verschieden sind. Wesentlich ist, dass diese (von A, B, C und D jeweils) verschiedenen Komponenten die Qualität der erfindungsgemäßen Komposition nicht verschlechtern. Besagte Verschlechterungen stehen insbesondere im Zusammenhang mit der Eignung als (Rheologie)Additiv. Falls die erfindungsgemäße Komposition einen zu hohen Anteil an weniger inerten Komponenten (z.B. funktionelle Gruppen, die Vernetzungsreaktionen bewirken können) aufweist, kann die Qualität verschlechtert werden (z.B. weil die Lagerstabilität herabgesetzt wird). Weiterhin sollte die erfindungsgemäße Komposition bezüglich Anwendung leicht handhabbar sein und möglichst wenig Komponenten enthalten, die für den Einsatz als Additiv keinen Nutzen bringen. Aus den vorstehenden Gründen kann zunächst bezüglich den von A, B, C und D jeweils verschiedenen Komponenten folgendes gesagt werden:
- Die von A, B, C und D jeweils verschiedenen Komponenten sind in der erfindungsgemäßen Komposition in Summe bevorzugt zu maximal 50 Gew.-%, enthalten, besonders bevorzugt jedoch zu maximal 30 Gew.-%, ganz besonders bevorzugt jedoch zu maximal 20 Gew.-%, speziell bevorzugt jedoch zu maximal 10 Gew.-%. In weiteren speziellen Ausführungsformen sind diese zu maximal 5 Gew.-% und zu maximal 3 Gew.-% enthalten. In einer weiteren besonders bevorzugten Ausführungsform ist die Komposition im Wesentlichen frei von zu A, B, C und D jeweils verschiedenen Komponenten.
- Die von A, B, C und D jeweils verschiedenen Komponenten haben in der Gesamtheit bevorzugt eine Hydroxylzahl von weniger als 15 mg KOH/g (wird relevant, wenn entsprechend hydroxylgruppenhaltige Spezies vorliegen).
- Die von A, B, C und D jeweils verschiedenen Komponenten liegen bevorzugt nicht als sogenannte Vernetzungsmittel vor. Vernetzungsmittel in diesem Sinne sind beispielsweise Polyisocyanate, Aminoharze, wie Melaminharze, Harnstoff-Formaldehyd-Harze und Benzoguanaminharze, Polyamine und Polyepoxide.
- Die erfindungsgemäße Komposition enthält bevorzugt keine Pigmente und keine festen Füllstoffe.
- Die erfindungsgemäße Komposition enthält vorzugsweise weniger als 5 Gew.-%, besonders bevorzugt weniger als 3 Gew.-% und ganz besonders bevorzugt weniger als 1 Gew.-% Wasser.
- Organische Komponenten der erfindungsgemäßen Komposition, welche jeweils nicht den Komponenten A, B, C und D zuzurechnen sind und ein Molekulargewicht von mehr als 800 g/ mol (bevorzugt mehr als 500 g/ mol) aufweisen, haben in Summe bevorzugt maximal einen Gewichtsanteil in der erfindungsgemäßen Komposition von 35 Gew.-%, besonders bevorzugt von maximal 8 Gew.-%. Höhermolekulare Komponenten erhöhen üblicherweise die Viskosität und damit die Handhabbarkeit. Die Molmassen der Komponenten mit einem Molekulargewicht bis 800 g/ mol (bzw. bis 500 g/ mol) lassen sich üblicherweise mittels NMR ermitteln, indem die Integrale betreffender NMR-Resonanzsignale ins Verhältnis gesetzt werden. In einer besonders bevorzugten Ausführungsform ist die Komposition im Wesentlichen frei von solchen zusätzlichen Komponenten mit einem Molekulargewicht von mehr als 800 g/ mol (bevorzugt von mehr als 500 g/ mol).

In einer Ausführungsform der Erfindung enthält die
erfindungsgemäße Komposition
i) 30 - 90 Gew.-% der Amidverbindung (A),
ii) 8 - 55 Gew.-% der Harnstoffverbindung (B),
iii) 0 - 15 Gew.-% der ionogene Verbindung (C) und
iv) 2 - 25 Gew.-% des organischen Lösemittels (D).

Die Anwesenheit des Lösemittels (D) ist ggf. praktikabel, wobei häufig alternativ auch auf das Lösemittel verzichtet wird. Dann ist es in der Regel zweckmäßig, wenn die Mischung aus der Amidverbindung (A) und der Harnstoffverbindung (B) (ggf. in Gegenwart der ionogenen Verbindung (C)) in flüssiger bzw. einphasiger Form (in Abwesenheit von D) bereitgestellt wird.

Ein hoher Lösemittelanteil bedeutet, dass bei der Endanwendung eine unerwünscht hohe Menge der entsprechenden Komposition ins Anwendungssystem eingebracht werden muss, um eine hinreichend hohe Konzentration der rheologisch aktiven Wirkstoffkomponenten (A) und (B) zu erzielen.

Das organische Lösemittel wird insbesondere im Hinblick auf den späteren Einsatz als (Rheologie)Additiv vom Fachmann gewählt (insbesondere hinreichend inert und fließfähig). Entsprechende Lösemittel haben üblicherweise ein Molekulargewicht von maximal 250 g/ mol. Werden überhaupt Lösemittel eingesetzt, so ist es bevorzugt, dass maximal drei, besonders bevorzugt maximal zwei voneinander verschiedene Lösemittel eingesetzt werden. Ganz besonders bevorzugt wird entweder gar kein oder maximal nur ein Lösemittel eingesetzt.

In einer bevorzugten Ausführungsform der Erfindung enthält die erfindungsgemäße Komposition
(i) 40 - 85 Gew.% der Amidverbindung (A),
(ii) 15 - 60 Gew.% der Harnstoffstoffverbindung (B),
(iii) 0 - 5 Gew.% einer ionogenen Verbindung (C) und
(iv) 0 - 25 Gew.% des organischen Lösungsmittels (D).

Die von A, B, C und D jeweils verschiedenen Komponenten sind dann bevorzugt in der erfindungsgemäßen Komposition in Summe mit einem Anteil von 0 - 30 Gew.-% enthalten, besonders bevorzugt mit einem Anteil von 0 - 20 Gew.-%, ganz besonders bevorzugt mit einem Anteil von 0 - 10 Gew.-%, speziell bevorzugt mit einem Anteil von 0 - 5 Gew.-% oder mit einem Anteil von 0 - 3 Gew.-%.

In einer besonders bevorzugten Ausführungsform der Erfindung enthält die erfindungsgemäße Komposition
(i) 45 - 82 Gew.% der Amidverbindung (A),
(ii) 18 - 55 Gew.% der Harnstoffstoffverbindung (B),
(iii) 0 - 4 Gew.% einer ionogenen Verbindung (C) und
(iv) 0 - 10 Gew.% des organischen Lösungsmittels (D).

In einer ausgesprochen typischen Ausführungsform der Erfindung enthält die erfindungsgemäße Komposition
(i) 50 - 75 Gew.% der Amidverbindung (A),
(ii) 25 - 50 Gew.% der Harnstoffstoffverbindung (B),
(iii) 0 - 3 Gew.% einer ionogenen Verbindung (C) und
(iv) 0 - 5 Gew.% des organischen Lösungsmittels (D).

Die von A, B, C und D jeweils verschiedenen Komponenten sind dann bevorzugt in der erfindungsgemäßen Komposition in Summe mit einem Anteil von 0 - 20 Gew.-% enthalten besonders bevorzugt mit einem Anteil von 0 - 10 Gew.-%, ganz besonders bevorzugt mit einem Anteil von 0 - 5 Gew.-%, speziell bevorzugt mit einem Anteil von 0 - 3 Gew.-%.

In einer bevorzugten Ausführungsform der Erfindung weisen einerseits 50 - 100 Gew.-% der Amidverbindung (A) keine Amidgruppe auf, an deren Stickstoffatom Wasserstoff gebunden ist und andererseits liegen diese 50 - 100 Gew.-% der Amidverbindung (A) außerdem gemäß einer allgemeinen Formel (I) vor, in der keiner der Reste aus der Gruppe Ra, Rb, Rc und Rd durch Wasserstoff repräsentiert werden.

Häufig liegt 50 - 100 Gew.-% der Amidverbindung (A) gemäß der allgemeinen Formel (la) vor.

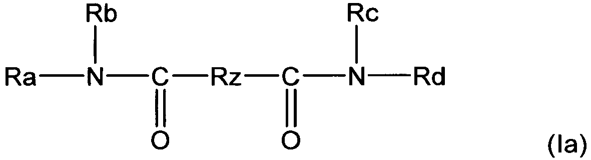

Nicht selten liegt 50 - 100 Gew.-% der Amidverbindung (A) gemäß der allgemeinen Formel (la) vor, wobei Ra und Rb und/oder Rc mit Rd zusammen mit dem Ra mit Rb und/ oder Rc mit Rd verbindenden N-Atom gemäß der allgemeinen Formel *(β-1)* gemeinsam einen verzweigten oder unverzweigten, gesättigten oder ungesättigten Zyklus mit 4 bis 7 Ringatomen ausbilden, welcher maximal zwei Heteroatome aus der Gruppe bestehend aus O und N aufweist.

Schematisch gesehen kann entsprechende Struktur dann wie folgt vorliegen: 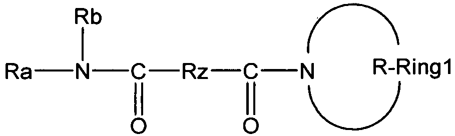 oder 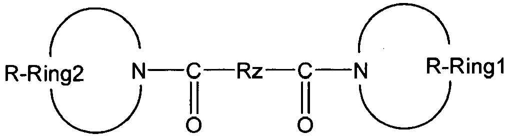 R-Ring1 und R-Ring2 liegen dann typischerweise als verbrückender aliphatischer Rest mit 4 bis 6 C-Atomen vor, der ggf. eine Ethergruppe als Substituent enthält.

Die Herstellung der jeweiligen Amidverbindungen (A) erfolgt je nach Strukturtyp anhand bekannter organisch-chemischer Methoden. Die Herstellung der vorstehender Strukturtypen erfolgt zweckmäßigerweise ausgehend von Dicarbonsäuren oder entsprechenden höherfunktionellen Carbonsäuren durch Umsetzung mit geeigneten Aminen. Alternativ zu den entsprechenden Carbonsäuren können auch deren reaktive Derivate (z.B. Anhydride, Halogenide oder Ester) für die Amidierung mit einem entsprechenden Amin umgesetzt werden. Eine mögliche Syntheseroute besteht in der Umsetzung einer entsprechenden Carbonsäure mit Thionylchlorid zum Säurechlorid (typische Bedingungen: 5 h bei 60°C, ggf. Thionylchlorid im Überschuss einsetzen und nach Umsetzung destillativ entfernen), der Anlösung in einem wasserfreien organischen Lösemittel (z.B. Toluol) und der darin stattfindenden Umsetzung des Säurechlorids mit einem geeigeneten Amin (typische Bedingungen: Reaktion bei 0°C starten und binnen 6 h auf Raumtemperatur erwärmen lassen). Die nachfolgende Aufreinigung kann z.B. destillativ durchgeführt werden.

Die Herstellung von Verbindungen des Typs (Ib) (siehe nachstehend) erfolgt bevorzugt durch Einsatz von entsprechenden zyklischen Aminen, z.B. Piperidin, Pyrrolidin oder Morpholin. So wird die Herstellung von entsprechenden Amiden beispielsweise in US 3,417,114 beschrieben. Weiterhin lassen sich die Herstellverfahren, die zur Herstellung von Säureamiden von Monocarbonsäuren einsetzbar sind, analog auf die Herstellung von Säureamiden von Dicarbonsäuren und höherfunktionellen Carbonsäuren übertragen: Entsprechende Herstellungsverfahren sind z.B. beschrieben in US 2,667,511, US 3,288,794, US 3,751,465 oder in US 3674851.

In einer weiteren Ausführungsform liegen 50 - 100 Gew.-% der Amidverbindung (A) gemäß der allgemeinen Formel (la) vor, wobei Ra, Rb, Rc und/ oder Rd jeweils nicht in Zyklen enthalten sind.

Gemäß einer anderen Variante der Erfindung liegt die allgemeinen Formel (I) für 50 - 100 Gew.-% der Amidverbindung (A) gemäß der allgemeinen Formel (Ib) vor

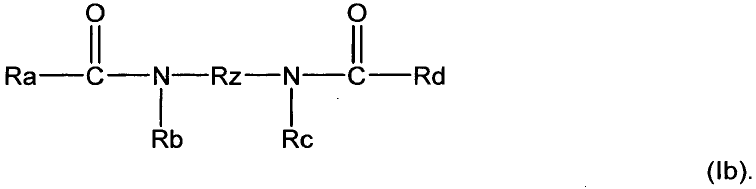

In einer speziellen Ausführungsform liegt die allgemeinen Formel (I) für 50 - 100 Gew.-% der Amidverbindung (A) gemäß der allgemeinen Formel (Ib) vor, wobei Rb und Rc zusammen mit dem jeweils an Rb und Rc gebundenen N-Atom sowie dem Rest Rz gemäß der allgemeinen Formel (*γ-1*) einen verzweigten oder unverzweigten, gesättigten oder ungesättigten Zyklus mit 5 bis 7 Ringatomen ausbilden, welcher maximal zwei Heteroatome aus der Gruppe bestehend aus O und N aufweist.

Bevorzugt ist in diesem Fall ein Zyklus mit 6 Ringatomen, welcher besonders bevorzugt durch Umsetzung von Piperazin mit einer entsprechenden Carbonsäure (oder deren reaktiven Derivat) erhältlich ist:

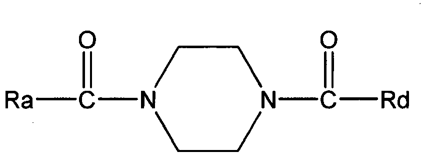

In einer anderen Ausführungsform liegt die allgemeinen Formel (I) für 50 - 100 Gew.-% der Amidverbindung (A) gemäß der allgemeinen Formel (Ib) vor, wobei Ra und Rb und/oder Rc mit Rd zusammen mit der Ra mit Rb und/ oder Rc mit Rd verbindenden Gruppierung CO-N gemäß der allgemeinen Formel (*α*-*1)* gemeinsam einen verzweigten oder unverzweigten, gesättigten oder ungesättigten Zyklus mit 4 bis 10 Ringatomen ausbilden, welcher maximal zwei Heteroatome aus der Gruppe bestehend aus O und N aufweist.

Exemplarisch sei dies durch die beiden folgenden Strukturen verdeutlicht:

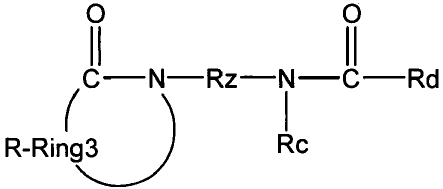

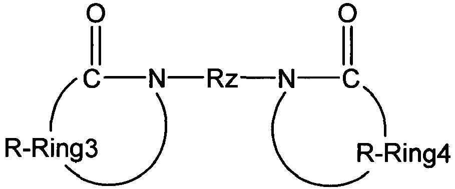

Oft handelt sich beim Rest Rz um C2- bis C6-Alkylenreste oder um einen Cyclohexylenrest bzw. Xylylenrest (-CH₂-C₆H₄-CH₂-).

Häufig liegen R-Ring3 und R-Ring4 als -(CH₂)₃- und/oder als -(CH₂)₄- vor.

Besonders typisch liegen R-Ring3 und R-Ring4 jeweils als -(CH₂)₃- vor.

Die Herstellung der jeweiligen Amidverbindungen (A) erfolgt je nach Strukturtyp anhand bekannter organisch-chemischer Methoden. Beispielsweise durch Umsetzung von Alkylendiaminen, Arylendiaminen und Alkylarylendiaminen oder (Poly)etherdiaminen (im Fall, dass R über keine weiteren Amino- oder Amidgruppen verfügt) oder entsprechenden höherfunktionellen Polyaminen (im Fall, dass R über weiteren Amino- oder Amidgruppen verfügt) mit entsprechenden, ggf. substituierten Carbonsäuren oder deren Derivaten (z.B. Halogeniden, Anhydriden, Estern und - als Sonderfall von Estern - auch Lactonen). Andere Strukturtypen werden bevorzugt durch Umsetzung entsprechender Di- oder Polyamine mit entsprechenden Lactonen hergestellt. Die Herstellung von weiteren Typen ist z.B. beschrieben in US 5,326,880, US 3,989,815 sowie in US 6,497,886.

Die rheologische Wirksamkeit der Amidverbindung (A) wird durch die Anwesenheit der Harnstoffverbindung (B) deutlich gesteigert.

Häufig weisen 70 - 100 Gew.-% der Harnstoffverbindung (B) entweder mindestens zwei Harnstoffgruppen oder mindestens eine Harnstoffgruppe und mindestens eine Urethangruppe auf.
In einer Ausführungsform liegen 50 - 100 Gew.-% der Harnstoffverbindung (B) gemäß der allgemeinen Formel (II) vor

R³¹-[R³³-Z-R³⁴-W-]ₙR³² (II)

mit
R³¹ und R³² jeweils gleich oder verschieden sowie jeweils unabhängig voneinander repräsentiert durch einen verzweigten oder unverzweigten, gesättigten oder ungesättigten 1 - 100 Kohlenstoffatome enthaltenden organischen Rest, der maximal jeweils eine Harnstoffgruppe und maximal jeweils eine Urethangruppe aufweist,
R³³ und R³⁴ jeweils gleich oder verschieden sowie jeweils unabhängig voneinander repräsentiert durch 1 - 300 Kohlenstoffatome enthaltende , optional Ethergruppen enthaltende verzweigte oder unverzweigte Polyesterreste, 2 - 300 Kohlenstoffatome enthaltende verzweigte oder unverzweigte Polyetherreste, 1 - 300 Kohlenstoffatome enthaltende verzweigte oder unverzweigte Polyamidreste, 3 bis 100 Siliziumatome enthaltende Polysiloxanreste, verzweigte oder unverzweigte C2-C22-Alkylenreste, verzweigte oder unverzweigte C3-C18-Alkenylenreste, C5-C12-Arylenreste und/ oder verzweigte oder unverzweigte C7-C22 Arylalkylenreste,
Z und W jeweils gleich oder verschieden sowie jeweils unabhängig voneinander repräsentiert durch NH-CO-O und/ oder NH-CO-NH,
n jeweils gleich oder verschieden sowie repräsentiert durch eine ganze Zahl von 1 bis 150, bevorzugt von 2 bis 120.

Nicht selten weisen 50 - 100 Gew.-% der Harnstoffverbindung (B) jeweils ein Molekulargewicht von 2000 bis 55000 sowie 4 - 150 Harnstoffgruppen auf.

In einer speziellen Ausführungsform liegen 50 - 100 Gew.-% der Harnstoffverbindung (B) jeweils vor gemäß einer der allgemeinen Formeln ausgewählt aus der Gruppe bestehend aus (IIIa), (IIIb), (IIIc) und (IIId) 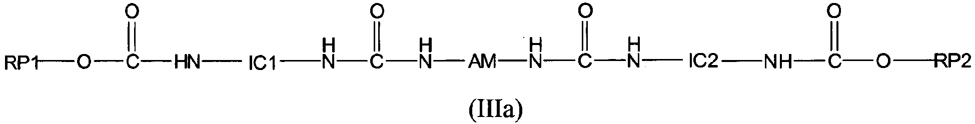 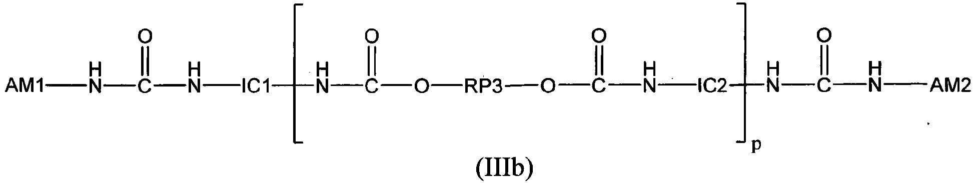 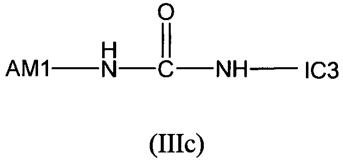 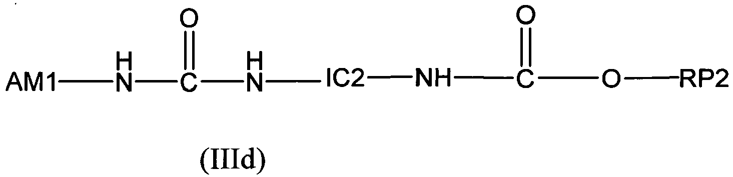 mit
AM gleich oder verschieden sowie repräsentiert durch einen linearen oder verzweigten, gesättigten oder ungesättigten, aliphatischen, aromatischen oder aliphatisch-aromatischen organischen Rest mit 2 bis 50 C-Atomen,
AM1 sowie AM2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 50 C-Atomen,
IC1 sowie IC2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen Kohlenwasserstoffrest mit 2 bis 40 C-Atomen,
IC3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 Kohlenstoffatomen,
RP1 sowie RP2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 24 C-Atomen und/ oder durch einen Polyetherrest mit 1 bis 120 Ethersauerstoffatomen und/ oder durch einen optional Ethergruppen enthaltenden Polyesterrest mit 1 bis 100 Estergruppen und/ oder durch einen Polyamidrest mit 1 bis 100 Amidgruppen und/ oder durch einen Polysiloxanrest mit 3 bis 100 Siliziumatomen,
RP3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 C-Atomen und/ oder durch einen (Poly)etherrest mit 1 bis 120 Ethersauerstoffatomen und/ oder durch einen Polyamidrest mit 1 bis 100 Amidgruppen und/ oder durch einen Polysiloxanrest mit 3 bis 100 Siliziumatomen und/oder durch einen optional Ethergruppen enthaltender Polyesterrest mit 1 bis 100 Estergruppen und
p gleich oder verschieden sowie repräsentiert durch 0 und/ oder 1.
Häufig liegen 70 - 100 Gew.-% der Harnstoffverbindung (B) jeweils vor gemäß einer der allgemeinen Formeln ausgewählt aus der Gruppe bestehend aus (IIIa), (IIIb), (IIIb) und (IIId), wobei
AM gleich oder verschieden sowie ausgewählt ist aus der Gruppe bestehend aus 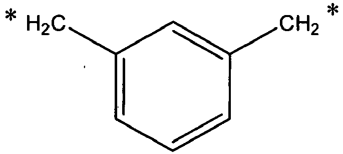 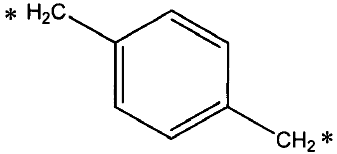 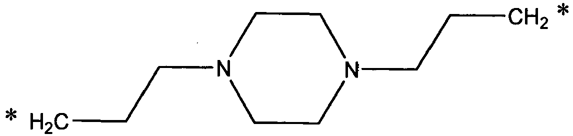 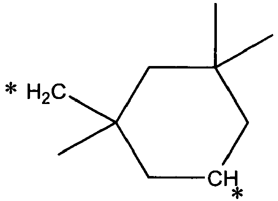 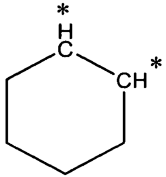 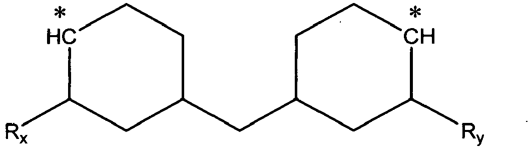 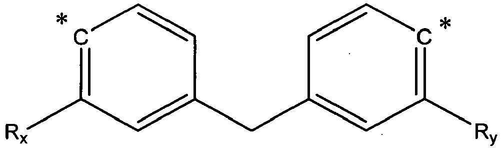 mit Rₓ und R_{y} gleich oder verschieden sowie jeweils unabhängig repräsentiert durch CH₃ und/ oder Wasserstoff,

   (CH₂)_{q}

   mit q gleich oder verschieden sowie repräsentiert durch eine ganze Zahl von 2 bis 12 ,
AM1 und AM2 jeweils gleich oder verschieden sowie ausgewählt sind aus der Gruppe bestehend aus n-Propyl, Isopropyl, Butyl, Isobutyl, tert-Butyl, Lauryl, Oleyl, Stearyl, Polyisobutylen und Polyether mit 2 bis 40 Ethersauerstoffatomen, Benzyl, Methylbenzyl, Cyclohexyl, Carboxyalkyl, Hydroxyalkyl und Alkylalkoxysilan.
IC1 und IC2 jeweils gleich oder verschieden sowie ausgewählt sind aus der Gruppe bestehend aus 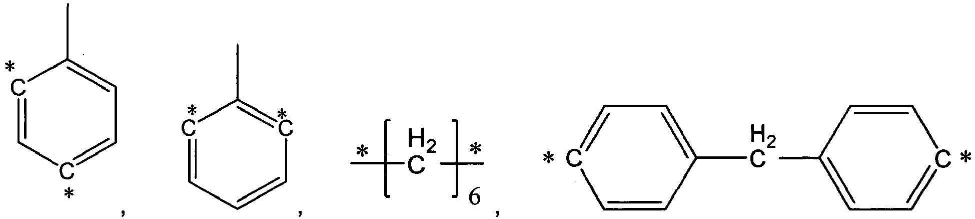 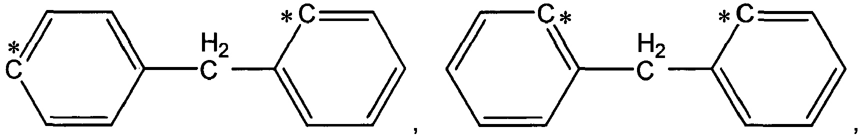 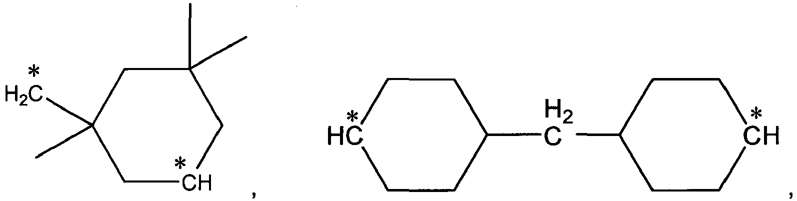 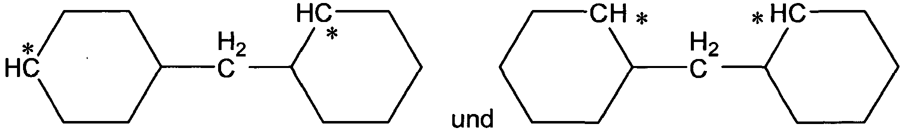
IC3 gleich oder verschieden sowie ausgewählt ist aus der Gruppe bestehend aus Methyl, Ethyl, Phenyl, Benzyl, Cyclohexyl und Stearyl,
RP1 und RP2 jeweils gleich oder verschieden sowie ausgewählt sind aus der Gruppe bestehend aus verzweigtem oder unverzweigtem C1-bis C18-Alkyl, Oleyl, Benzyl, Allyl, bevorzugt Struktureinheiten von Ethylenoxid, Propylenoxid und/ oder Butylenoxid enthaltender Polyetherrest und Struktureinheiten von Epsilon-Caprolacton und/ oder Delta-Valerolacton enthaltender Polyesterrest,
RP3 gleich oder verschieden sowie ausgewählt ist aus der Gruppe bestehend aus linearem oder verzweigtem C1- bis C18-Alkylen, linearem oder verzweigtem C2- bis C18-Alkenylen, bevorzugt Struktureinheiten von Ethylenoxid, Propylenoxid und/ oder Butylenoxid enthaltender Polyether mit 1 bis 25 Ethersauerstoffatomen.

In einer speziellen Ausführungsform sind 70 - 100 Gew.-% der Harnstoffverbindung (B) jeweils durch Umsetzung von durch Isocyanurat- und/oder Uretdionbildung oligomerisierten Isocyanaten mit monofunktionellen Aminen herstellbar.

In einer typischen Ausführungsform enthält 95 - 100 Gew.-%, bevorzugt 98 - 100 Gew.-% der Harnstoffverbindung (B) jeweils mindestens
ein Molekülsegment der allgemeinen Formel (IVa)

-O-CO-NH-Y₁-NH-CO-NH- (IVa)

mit
Y₁ gleich oder verschieden sowie repräsentiert durch einen 6 bis 20 Kohlenstoffatome enthaltenden gesättigten oder ungesättigten, verzweigten oder unverzweigten Kohlenwasserstoffrest,
und jeweils kein Molekülsegment der allgemeinen Formel (IVb)

-O-CO-NH-Y₂-NH-CO-O- (IVb)

mit
Y₂ gleich oder verschieden sowie repräsentiert durch einen 6 bis 20 Kohlenstoffatome enthaltenden gesättigten oder ungesättigten, verzweigten oder unverzweigten Kohlenwasserstoffrest.

Die Herstellung der Harnstoffverbindungen (B) kann in bekannter Weise durch Umsetzung entsprechender Isocyanate mit Aminen erfolgen. Herstellverfahren für solche Harnstoffverbindungen werden z.B. näher beschrieben in EP 0006252, DE 2822908, DE 10241853, DE 19919482, EP 1188779 sowie in DE 102008059702.

Die Herstellung insbesondere höhermolekularer Polyharnstoffverbindungen wird z.B. in EP 2292675 beschrieben.

In einer Ausführungsform der Erfindung enthält die erfindungsgemäße Komposition die ionogene Verbindung (C). Diese liegt meist vor in Form eines Salzes, bevorzugt als Lithium-, Calcium- oder Magnesiumsalz, besonders bevorzugt als Lithium- oder Calciumsalz. Als Anion (Gegenion) ist bevorzugt Halogenid, Pseudohalogenid, Formiat, Acetat und/ oder Nitrat, besonders bevorzugt Chlorid, Acetat und/oder Nitrat. Zu den ionogenen Verbindungen (C) zählen auch sogenannte ionische Flüssigkeiten, welche keine organischen Lösemittel im Sinne der Erfindung sind.

In einer Ausführungsform der Erfindung enthält die erfindungsgemäße Komposition 0,5 - 4,0 Gew.-% der ionogenen Verbindung (C), wobei 50 - 100 Gew.- % der ionogenen Verbindung (C) als Lithium- oder Calciumsalz, bevorzugt als deren Chlorid, Acetat und/ oder Nitrat, vorliegt.

Die erfindungsgemäße Komposition eignet sich bevorzugt zur Rheologiesteuerung, insbesondere zur Thixotropierung, von flüssigen Systemen bzw. flüssigen Mischungen.

Diese flüssige Mischungen liegen bevorzugt vor als Beschichtung, insbesondere als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Spachtelmasse, als Druckfarbe oder als Tinte (z.B. als Inkjet-Tinte). Eine weitere Verwendung als Hilfsmittel zur Abdriftminderung bzw. zur Abdriftvermeidung bei Sprühvorgängen (sog. "drift reduction / deposition aids") ist möglich.

Die erfindungsgemäße Komposition eignet sich zur Rheologiesteuerung, insbesondere zur Thixotropierung, von flüssigen Systemen.

Die Erfindung betrifft auch die Verwendung der erfindungsgemäßen Komposition zur Rheologiesteuerung, insbesondere zur Thixotropierung, einer flüssigen Mischung.

Die die flüssige Mischung kann vorliegen als Beschichtung, insbesondere als Lack, als Kunststoffformulierung, als Pigmentpaste, als Dichtstoffformulierung, als Kosmetika, als Keramikformulierung, als Klebstoffformulierung, als Vergussmasse, als Bohrspüllösung, als Baustoffformulierung, als Schmierstoff, als Spachtelmasse, als Druckfarbe oder als Tinte.

Schließlich betrifft die vorliegende Erfindung eine Zubereitung, die als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Bohrspüllösung, als Spachtelmasse, als Druckfarbe oder als Tinte vorliegt und welcher 0,1 bis 7,5 Gew.% der erfindungsgemäßen Komposition zugesetzt worden ist.

Besonders bevorzugt ist die Verwendung der erfindungsgemäßen Komposition als Rheologiesteuerungsmittel, bevorzugt als Thixotropiemittel, zur Rheologiesteuerung von Lacken, Druckfarben, Tinten (wie z.B. Inkjettinten), Kunststoff-Formulierungen, Kosmetikzubereitungen, Baustoff-Formulierungen, Formulierungen zum Einsatz bei der Erdöl- und Erdgasförderung, Schmierstoffen und/oder Klebstoffen.

Bei den Lacken, Druckfarben und (Inkjet)tinten kann es sich sowohl um lösemittelhaltige als auch lösemittelfreie oder wasserbasierte Lacke, Druckfarben und Inkjettinten handeln. Lacke sind in unterschiedlichsten Anwendungsfeldern einsetzbar, unter anderem im Bereich Automobillacke, Bautenlacke, Schutzlacke (u.a. Lackierung von Schiffen und Brücken), Can- und Coil-Lacke, Holz- und Möbellacke, Industrielacke, Kunststofflackierungen, Drahtlacke, Beschichtungen von Lebensmitteln und Saatgut sowie auch als sog. Color Resists, welche für Farbfilter z.B. in LC-Displays eingesetzt werden. Der Anwendungsbereich Lacke umfasst auch pastöse Materialien, welche in der Regel einen sehr hohen Anteil von Feststoff und einen geringen Anteil von flüssigen Komponenten aufweisen, z.B. sog. Pigmentpasten oder auch Pasten auf Basis von feinverteilten Metallteilchen oder Metallpulvern (beispielsweise auf Basis von Silber, Kupfer, Zink, Aluminum, Bronze, Messing).

Bei den Kunststoff-Formulierungen kann es sich um die (flüssigen) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind daher ungesättigte Polyesterharze, Vinylesterharze, Acrylatharze, Epoxidharze, Polyurethanharze, Formaldehydharze (wie Melamin-Formaldehyd oder Harnstoff-Formaldehyd). Diese können unter unterschiedlichsten Bedingungen ausgehärtet werden, so z.B. bei Raumtemperatur (kalthärtende Systeme) oder bei erhöhter Temperatur (heißhärtende Systeme), ggf. auch unter Aufbringung von Druck ("Closed Mold"-Applikation, Sheet Molding Compound oder Bulk Molding Compound). Zu den bevorzugten Kunststoff-Formulierungen zählen auch PVC-Plastisole.

Bei den Kosmetikzubereitungen kann es sich um mannigfaltige flüssige Kompositionen handeln, die im sog. Personal Care- oder auch Health Care-Bereich eingesetzt werden, so z.B. Lotionen, Cremes, Pasten (z.B. Zahnpasta), Schäume (z.B. Rasierschaum), Gele (z.B. Rasiergel, Duschgel, Arzneiwirkstoffe in gelförmiger Formulierung), Haarshampoo, Flüssigseifen, Nagellacke, Lippenstifte, Haarfärbemittel.

Bei den Baustoff-Formulierungen kann es sich um bei Verarbeitung flüssige oder pastöse Materialien handeln, die im Bausektor eingesetzt werden und nach Aushärtung fest werden, so z.B. hydraulische Bindemittel wie Beton, Zement, Mörtel, Fliesenkleber, Gips.

Bei den Schmierstoffen handelt es sich um Mittel, welche zur Schmierung eingesetzt werden, d.h. die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe und Schmierfette bevorzugt sind. Auch Gleitmittel und Bohrspülmittel ("drilling fluids", wie sie in der Erdölförderung eingesetzt werden) zählen definitionsgemäß zu den Schmierstoffen.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Klebstoffe können lösemittelhaltig, lösemittelfrei oder wasserbasiert sein.

Die Erfindung soll nachstehend anhand von Beispielen näher erläutert werden.

In den folgenden Beispielen wurde die Aminzahl bestimmt nach DIN 16945. Analog wurde die OH-Zahl bestimmt gemäß DIN / ISO 4629

Folgende kommerzielle Rohstoffe kamen zum Einsatz:

| **Name** | **Beschreibung** | **Hersteller** |
|---|---|---|
| Borchi Nox M 2 | synthetisches Antihautbildungsmittel (Methylethylketoxim) | OMG Borchers GmbH |
| BYK-066 | Silikonhaltiger Entschäumer | BYK-Chemie GmbH |
| Dowanol PM | Methoxypropanol | Dow Chemical Company |
| Dowanol PMA | 1,2-Propanediolmonoacetat-Monomethylether | Dow Chemical Company |
| Epikote 1001-X 75 | Bisphenol A-Harz, gelöst in Xylol | Hexion Specialty Chemicals |
| Isopar H | Kohlenwasserstoff-Lösemittel mit geringem Geruch und geringem Aromatenanteil (hauptsächlich bestehend aus Isoalkanen) | ExxonMobil Chemical |
| Kraton 1118 AS | Styrol-Butadien-Blockcopolymer | Kraton Performance Polymers |
| Nuodex Combi APB | Blei- und bariumfreier Kombinationstrockner | Elementis Specialties B.V. |
| Palapreg P 17-02 | Ungesättigtes Polyesterharz zur Herstellung von faserverstärkten Kunststoffen oder von nicht-verstärkten gefüllten Produkten | DSM Composite Resins |
| Palapreg H814-01 | Lösung von Polystyrol in Styrol | DSM Composite Resins |
| Setalux D A 870 BA | Polyisocyanatvernetzendes Acrylatharz, 70%ig in Butylacetat | Nuplex Resins GmbH |
| Synthalat W48 | Wasserverdünnbares, speziell modifiziertes Alkydharz, ca. 35 %ig in BG/Ammoniak/Wasser (8 : 2,3 : 54,7) | Synthopol Chemie |
| Worléekyd S 366 | Langöliges Alkydharz, 60%ig in Isopar H | Worlée Chemie GmbH |
| Worléekyd S 351 | mittelfettes, mit Sojaöl modifiziertes, lufttrocknendes Alkydharz | Worlée Chemie GmbH |

### Beispiel 1b:

In einem Reaktionsgefäß (Rundkolben mit Rührer, Rückflusskühler, Wasserabscheider und Tropftrichter) wurden unter Stickstoffatmosphäre bei 60°C 412,5 g (2,48 mol) Hexamethylendiamin in Form einer 70%-igen wässrigen Lösung vorgelegt. Innerhalb von 60 Minuten wurden unter Rühren 430,0 g (5,0 mol) Butyrolacton zugetropft. Durch die exotherme Reaktion stieg die Temperatur auf 90°C. Anschließend wurden 0,4 g p-Toluolsulfonsäure zugegeben.

Die Temperatur wurde über Temperaturrampen von jeweils 20 Minuten um jeweils 10°C bis auf 170°C erhöht. Dann wurde auf eine Endtemperatur von 250°C aufgeheizt und für 18,5 Stunden gehalten. Während der gesamten Reaktionszeit wurde das Reaktionswasser durch Destillation aus der Reaktionsmischung entfernt. Das Reaktionsprodukt ist eine gelbe, leicht viskose Flüssigkeit mit einer Aminzahl von 15,4 mg KOH/g.

Zur Entfernung restlicher Reaktanden wurde das Reaktionsprodukt durch Destillation mittels eines Dünnschichtverdampfers bei 120°C und <1 mbar aufgereinigt. Die Aminzahl betrug danach < 1 mg KOH/g.

### Beispiel 2b:

In einem Reaktionsgefäß (Rundkolben mit Rührer, Rückflusskühler, Wasserabscheider und Tropftrichter) wurden unter Stickstoffatmosphäre bei 60°C 42,0 g (0,7 mol) Ethylendiamin vorgelegt. Innerhalb von 45 Minuten wurden unter Rühren 132,6 g (1,54 mol) Butyrolacton zugetropft. Durch die exotherme Reaktion stieg die Temperatur auf 140°C.

Die Temperatur wurde danach über Temperaturrampen von jeweils 45 Minuten um jeweils 10°C bis auf 250°C erhöht. Diese Endtemperatur wurde für 9 Stunden gehalten. Während der gesamten Reaktionszeit wurde das Reaktionswasser durch Destillation aus der Reaktionsmischung entfernt. Das Endprodukt ist kristallin.

### Beispiel 3b:

In einem Reaktionsgefäß (Rundkolben mit Rührer, Rückflusskühler, Wasserabscheider und Tropftrichter) wurden unter Stickstoffatmosphäre bei 60°C 74,1 g (1,0 mol) 1,3-Propandiamin vorgelegt. Innerhalb von 75 Minuten wurden unter Rühren 189,4g (2,2 mol) Butyrolacton zugetropft. Durch die exotherme Reaktion stieg die Temperatur auf 120°C. Anschließend wurden 0,4 g p-Toluolsulfonsäure zugegeben.

Die Temperatur wurde danach über Temperaturrampen von jeweils 45 Minuten um jeweils 10°C bis auf 250°C erhöht. Diese Endtemperatur wurde für 9 Stunden gehalten. Während der gesamten Reaktionszeit wurde das Reaktionswasser durch Destillation aus der Reaktionsmischung entfernt. Das Reaktionsprodukt hatte eine Hydroxylzahl von 4,0.

### Beispiel 4b:

In einem Reaktionsgefäß (Rundkolben mit Rührer, Rückflusskühler, Wasserabscheider und Tropftrichter) wurden unter Stickstoffatmosphäre bei 60°C 37,1 g (0,5 mol) 1,2-Propandiamin vorgelegt. Innerhalb von 40 Minuten wurden unter Rühren 94,7 g (1,1 mol) Butyrolacton zugetropft. Durch die exotherme Reaktion stieg die Temperatur auf 110°C.

Die Temperatur wurde danach über Temperaturrampen von jeweils 45 Minuten um jeweils 10°C bis auf 250°C erhöht. Diese Endtemperatur wurde für 9 Stunden gehalten. Während der gesamten Reaktionszeit wurde das Reaktionswasser durch Destillation aus der Reaktionsmischung entfernt. Das Endprodukt ist kristallin.

### Beispiel 5b:

In einem Reaktionsgefäß (Rundkolben mit Rührer, Rückflusskühler, Wasserabscheider und Tropftrichter) wurden unter Stickstoffatmosphäre bei 60°C 64,9 g (0,73 mol) 1,4-Diaminobutan vorgelegt. Innerhalb von 30 Minuten wurden unter Rühren 69,7 g (0,81 mol) Butyrolacton zugetropft. Durch die exotherme Reaktion stieg die Temperatur auf 100°C.

Die Temperatur wurde danach über Temperaturrampen von jeweils 45 Minuten um jeweils 10°C bis auf 250°C erhöht. Diese Endtemperatur wurde für 9 Stunden gehalten. Während der gesamten Reaktionszeit wurde das Reaktionswasser durch Destillation aus der Reaktionsmischung entfernt. Das Endprodukt ist kristallin.

### Beispiel 6 b:

In einem Reaktionsgefäß (Rundkolben mit Rührer, Rückflusskühler, Wasserabscheider und Tropftrichter) wurden unter Stickstoffatmosphäre bei 100°C 72,1 g (0,5 mol) geschmolzenes 1,8-Octamethylendiamin vorgelegt. Innerhalb von 20 Minuten wurden unter Rühren 94,7g (1,1 mol) Butyrolacton zugetropft. Durch die exotherme Reaktion stieg die Temperatur auf 160°C.

Die Temperatur wurde danach über Temperaturrampen von jeweils 45 Minuten um jeweils 10°C bis auf 250°C erhöht. Diese Endtemperatur wurde für 12 Stunden gehalten. Während der gesamten Reaktionszeit wurde das Reaktionswasser durch Destillation aus der Reaktionsmischung entfernt. Das Endprodukt ist flüssig.

### Beispiel 7 b:

In einem Reaktionsgefäß (Rundkolben mit Rührer, Rückflusskühler, Wasserabscheider und Tropftrichter) wurden unter Stickstoffatmosphäre bei 80°C 84,1 g (0,42 mol) geschmolzenes Dodecandiamin vorgelegt. Innerhalb von 20 Minuten wurden unter Rühren 79,5g (0,92 mol) Butyrolacton zugetropft. Durch die exotherme Reaktion stieg die Temperatur auf 135°C.

Die Temperatur wurde danach über Temperaturrampen von jeweils 20 Minuten um jeweils 10°C bis auf 250°C erhöht. Diese Endtemperatur wurde für 11 Stunden gehalten. Es wurden 0,4 g p-Toluolsulfonsäure zugegeben. Während der gesamten Reaktionszeit wurde das Reaktionswasser durch Destillation aus der Reaktionsmischung entfernt. Das Endprodukt ist fest und von hellroter Farbe.

### Beispiel 8 b:

In einem Reaktionsgefäß (Rundkolben mit Rührer, Rückflusskühler, Wasserabscheider und Tropftrichter) wurden unter Stickstoffatmosphäre bei 30°C 68,1 g (0,5 mol) m-Xylylendiamin vorgelegt. Innerhalb von 10 Minuten wurden unter Rühren 94,1 g (1,1 mol) Butyrolacton zugetropft. Der Ansatz wurde zunächst auf 100°C aufgeheizt, dann wurde
die Temperatur über Temperaturrampen von jeweils 20 Minuten um jeweils 10°C erhöht. Bei 120°C war eine exotherme Reaktion feststellbar. Die Temperatur stieg auf 170°C. Danach wurde die Temperatur weiter über Temperaturrampen von jeweils 20 Minuten um jeweils 10°C bis auf 250°C erhöht und für 7 Stunden gehalten. Es wurden 0,4g p-Toluolsulfonsäure zugegeben und weitere 6h bei 250°C gerührt.

Während der gesamten Reaktionszeit wurde das Reaktionswasser durch Destillation aus der Reaktionsmischung entfernt. Das Reaktionsprodukt ist eine hochviskose, orange Flüssigkeit mit einer Aminzahl von 0,6 mg KOH/g.

### Beispiel 9b:

In einem Reaktionsgefäß (Rundkolben mit Rührer, Rückflusskühler, Wasserabscheider und Tropftrichter) wurden unter Stickstoffatmosphäre bei 30°C 57,1 g (0,5 mol) 1,2-Diaminocyclohexan vorgelegt. Innerhalb von 10 Minuten wurden unter Rühren 94,1 g (1,1 mol) Butyrolacton zugetropft. Die Temperatur wurde über Temperaturrampen von jeweils 20 Minuten um jeweils 10°C erhöht. Bei 90°C war eine exotherme Reaktion feststellbar. Die Temperatur stieg auf 104°C. Danach wurde die Temperatur weiter über Temperaturrampen von jeweils 20 Minuten um jeweils 10°C bis auf 250°C erhöht und für 6 Stunden gehalten. Es wurden 0,4 g p-Toluolsulfonsäure zugegeben und weitere 6h bei 250°C gerührt. Während der gesamten Reaktionszeit wurde das Reaktionswasser durch Destillation aus der Reaktionsmischung entfernt. Das Endprodukt ist fest.

### Beispiel 10 b:

In einem Reaktionsgefäß (Rundkolben mit Rührer, Rückflusskühler, Wasserabscheider und Tropftrichter) wurden unter Stickstoffatmosphäre bei 30°C 68,1 g (0,4 mol) Isophorondiamin vorgelegt. Innerhalb von 10 Minuten wurden unter Rühren 75,8 g (0,88 mol) Butyrolacton zugetropft. Der Ansatz wurde zunächst auf 100°C aufgeheizt, dann wurde die Temperatur über Temperaturrampen von jeweils 20 Minuten um jeweils 10°C erhöht. Bei 120°C war eine exotherme Reaktion feststellbar. Die Temperatur stieg auf 160°C. Danach wurde die Temperatur weiter über Temperaturrampen von jeweils 20 Minuten um jeweils 10°C bis auf 250°C erhöht und für 6 Stunden gehalten. Es wurden 0,4g p-Toluolsulfonsäure zugegeben und weitere 6 h bei 250°C gerührt.

Während der gesamten Reaktionszeit wurde das Reaktionswasser durch Destillation aus der Reaktionsmischung entfernt. Das Reaktionsprodukt ist eine Flüssigkeit mit einer Aminzahl von 15,6 mg KOH/g.

### Beispiel 11 b:

In einem Reaktionsgefäß (Rundkolben mit Rührer, Rückflusskühler, Wasserabscheider und Tropftrichter) wurden unter Stickstoffatmosphäre bei 30°C 92,0 g (0,4 mol) Polyetherdiamin (Jeffamine D230 der Firma Huntsman) vorgelegt. Innerhalb von 10 Minuten wurden unter Rühren 75,8 g (0,88 mol) Butyrolacton zugetropft. Die Temperatur wurde über Temperaturrampen von jeweils 20 Minuten um jeweils 10°C bis auf 250°C für 6 Stunden bei dieser Temperatur gehalten. Es wurden 0,4 g p-Toluolsulfonsäure zugegeben und weitere 6h bei 250°C gerührt.

Während der gesamten Reaktionszeit wurde das Reaktionswasser durch Destillation aus der Reaktionsmischung entfernt. Das Endprodukt ist eine leicht viskose Flüssigkeit mit einer Aminzahl von 6 mg KOH/g.

### Beispiel 12 b:

In einem Reaktionsgefäß (Rundkolben mit Rührer, Rückflusskühler, Wasserabscheider und Tropftrichter) wurden unter Stickstoffatmosphäre bei 30°C 120,0g (0,3mol) Polyetherdiamin (Jeffamine D400 der Firma Huntsman) vorgelegt. Innerhalb von 10 Minuten wurden unter Rühren 56,8g (0,66 mol) Butyrolacton zugetropft. Die Temperatur wurde über Temperaturrampen von jeweils 20 Minuten um jeweils 10°C bis auf 250°C für 6 Stunden bei dieser Temperatur gehalten. Es wurden 0,4 g p-Toluolsulfonsäure zugegeben und weitere 6 h bei 250°C gerührt.

Während der gesamten Reaktionszeit wurde das Reaktionswasser durch Destillation aus der Reaktionsmischung entfernt. Das Endprodukt ist eine leicht viskose Flüssigkeit mit einer Aminzahl von 7,7 mg KOH/g.

### Beispiel 13 b:

In einem Reaktionsgefäß (Rundkolben mit Rührer, Rückflusskühler, Wasserabscheider und Tropftrichter) wurden unter Stickstoffatmosphäre bei 80°C 200,0 g (0,1 mol) Polyetherdiamin (Jeffamine D2000 der Firma Huntsman) vorgelegt. Innerhalb von 10 Minuten wurden unter Rühren 18,9 g (0,22 mol) Butyrolacton zugetropft. Die Temperatur wurde über Temperaturrampen von jeweils 20 Minuten um jeweils 10°C bis auf 200°C für 6 Stunden bei dieser Temperatur gehalten. Es wurden 0,4 g p-Toluolsulfonsäure zugegeben und weitere 6h bei 250°C gerührt. Während der gesamten Reaktionszeit wurde das Reaktionswasser durch Destillation aus der Reaktionsmischung entfernt. Das Endprodukt ist eine viskose Flüssigkeit mit einer Aminzahl von 6,5 mg KOH/g.

### Beispiel 14 b:

In einem Reaktionsgefäß (Rundkolben mit Rührer, Rückflusskühler, Wasserabscheider und Tropftrichter) wurden unter Stickstoffatmosphäre bei 80°C 81,7 g (0,39 mol) 4,9-Dioxadecan-1,2-diamin vorgelegt. Innerhalb von 10 Minuten wurden unter Rühren 75,7 g (0,87 mol) Butyrolacton zugetropft. Die Temperatur wurde über Temperaturrampen von jeweils 20 Minuten um jeweils 10°C bis auf 200°C für 6 Stunden bei dieser Temperatur gehalten. Es wurden 0,4g p-Toluolsulfonsäure zugegeben und weitere 6 h bei 250°C gerührt. Während der gesamten Reaktionszeit wurde das Reaktionswasser durch Destillation aus der Reaktionsmischung entfernt. Das Endprodukt ist eine leicht viskose Flüssigkeit mit einer Aminzahl von 3,5 mg KOH/g.

### Beispiel 15b:

In einem Reaktionsgefäß (Rundkolben mit Rührer, Tropftrichter und Rückflusskühler) wurden unter Stickstoffatmosphäre 315,0 g (1,9 mol) Glutarsäuredimethylester und und 508,0 g (3,8 mol) Dibutylamin vorgelegt. Die Reaktionsmischung wurde 2h bei 100°C gerührt. Anschließend wurde ein Wasserabscheider an die Apparatur angeschlossen und die Temperatur auf 170°C erhöht. Dabei wurden 200g Methanol abgeschieden. Die Reaktionsmischung hatte nach beendeter Reaktionszeit eine Aminzahl von 73mg KOH/g.

Zur Entfernung restlicher Reaktanden wurde das Reaktionsprodukt durch Destillation mittels eines Dünnschichtverdampfers bei 120°C und <1 mbar aufgereinigt. Die Aminzahl betrug danach 4,5 mg KOH/g.

### Beispiel 16 b:

In einem Vierhalskolben mit Rührer, Thermometer und Wasserabscheider werden 84,0 g Pentansäure-5-(dimethylamino)-2-methyl-5-oxo-methylester (0,449 mol) und 116,0 g Dibutylamin (0,898 mol) unter Rühren auf 150°C erwärmt. Das entstehende Methanol wird am Wasserabscheider abgetrennt. Die Mischung wird bei dieser Temperatur für 16 Stunden erhitzt. Anschließend wird auf 170°C erwärmt und für 2 Stunden ein Vakuum von 0,8 mbar angelegt, um flüchtige Bestandteile zu entfernen. Das erhaltene klare, flüssige Produkt wird mittels IR-Spektroskopie auf Abwesenheit der Esterbande bei 1711 cm⁻¹ kontrolliert: Es konnte keine Esterbande nachgewiesen werden. Ausbeute: 119 g klare Flüssigkeit (= 93% der theoretischen Ausbeute)

### Beispiel 17 b:

In einem Vierhalskolben mit Rührer, Thermometer und Wasserabscheider werden 90,8 g Pentansäure-5-(dimethylamino)-2-methyl-5-oxo-methylester (0,485 mol) und 130,0 g Oleylamin (0,482 mol) unter Rühren auf 150°C erwärmt. Das entstehende Methanol wird am Wasserabscheider abgetrennt. Die Mischung wird bei dieser Temperatur für 10 Stunden erhitzt. Anschließend wird bei 80°C abgekühlt und bei dieser Temperatur für 2 Stunden ein Vakuum von 0,8 mbar angelegt, um die restlichen flüchtigen Bestandteile zu entfernen. Das erhaltene klare, flüssige Produkt wird mittels IR-Spektroskopie auf Abwesenheit der Esterbande bei 1711 cm⁻¹ kontrolliert: Es konnte keine Esterbande nachgewiesen werden. Ausbeute: 198 g klare pastöse Flüssigkeit (= 97% der theoretischen Ausbeute)

### Beispiel 18 t:

In einem Vierhalskolben mit Rührer, Tropftrichter, Thermometer und Wasserabscheider werden 140,8 g Pentansäure-5-(dimethylamino)-2-methyl-5-oxo-methylester (0,752 mol) und 43,7 g 1,6-Hexamethylendiamin (0,376 mol) unter Rühren auf 180°C erwärmt. Das entstehende Methanol wird am Wasserabscheider abgetrennt. Die Mischung wird bei dieser Temperatur für 10 Stunden erhitzt. Anschließend wird auf 150°C abgekühlt und bei dieser Temperatur für 2 Stunden ein Vakuum von 0,8 mbar angelegt, um die restlichen flüchtigen Bestandteile zu entfernen.

Das erhaltene klare, flüssige Produkt wird mittels IR-Spektroskopie auf Abwesenheit der Esterbande bei 1711 cm⁻¹ kontrolliert: Es konnte keine Esterbande nachgewiesen werden. Ausbeute: 150 g viskose klare Flüssigkeit (= 94% der theoretischen Ausbeute)

### Beispiel 19 t:

In einem Vierhalskolben mit Rührer, Tropftrichter, Thermometer und Wasserabscheider werden 150,3 g Pentansäure-5-(dimethylamino)-2-methyl-5-oxo-methylester (0,803 mol) und 54,6 g meta-Xylylendiamin (0,402 mol) unter Rühren auf 150°C erwärmt. Das entstehende Methanol wird am Wasserabscheider abgetrennt. Die Mischung wird bei dieser Temperatur für 11 Stunden erhitzt. Anschließend wird bei 150°C für 2 Stunden ein Vakuum von 0,8 mbar angelegt, um die restlichen flüchtigen Bestandteile zu entfernen. Das erhaltene klare, flüssige Produkt wird mittels IR-Spektroskopie auf Abwesenheit der Esterbande bei 1711 cm⁻¹ kontrolliert: Es konnte keine Esterbande nachgewiesen werden.

### Beispiel 20 p:

In einem Vierhalskolben mit Rührer, Tropftrichter, Thermometer und Wasserabscheider werden 160,2 g Pentansäure-5-(dimethylamino)-2-methyl-5-oxo-methylester (0,856 mol) und 44,2 g Diethylentriamin (0,428 mol) unter Rühren auf 180°C erwärmt. Das entstehende Methanol wird am Wasserabscheider abgetrennt. Die Mischung wird bei dieser Temperatur für 15 Stunden erhitzt. Anschließend wird auf 150°C abgekühlt und bei dieser Temperatur für 2 Stunden ein Vakuum von 0,8 mbar angelegt, um die restlichen flüchtigen Bestandteile zu entfernen. Das erhaltene klare, flüssige Produkt wird mittels IR-Spektroskopie auf Abwesenheit der Esterbande bei 1711 cm⁻¹ kontrolliert: Es konnte keine Esterbande gefunden werden. Ausbeute: 168 g festes Produkt (= 95% der theoretischen Ausbeute).

Nach Beendigung der Reaktion wurde am Rotationsverdampfer das entstandene Reaktionswasser abdestilliert. Es wurde hellgelbe Flüssigkeit mit einer Aminzahl von 4 mg KOH/g erhalten.

### Komposition K1:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g des Reaktionsprodukts aus Beispiel 1b vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Die Aminzahl liegt bei 3,6 mg KOH/g (bestimmt gemäß DIN 16945). Das Produkt ist eine hochviskose Flüssigkeit und enthält 38 Gew.% der Harnstoffverbindung.

### Komposition K2:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 188 g des Reaktionsprodukts aus Beispiel 8b vorgelegt und unter Stickstoffatmosphäre unter Rühren auf 120°C erwärmt. 5,1 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein trübes, farbloses und leicht viskoses Produkt erhalten. Die Aminzahl liegt bei 3 mg KOH/g (bestimmt gemäß DIN 16945). Das Produkt enthält 28 Gew.% der Harnstoffverbindung.

### Komposition K3:

### Stufe 1

Zunächst werden 64,4 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 187,8 g des Reaktionsprodukts aus Beispiel 7b auf 100°C erwärmt und bei Erreichen der Temperatur mit 5,9 g Lithiumchlorid versetzt. Das Lithiumchlorid wird danach innerhalb 1 Stunde bei 100°C unter Rühren gelöst. Anschließend wird die Temperatur auf 80°C gesenkt

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein bräunliches und wachsartiges Produkt erhalten und das bei 80°C flüssig ist. Das Produkt enthält 28 Gew.-% der Harnstoffverbindung.

### Komposition K4:

### Stufe 1

Zunächst werden 64,4 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 187,8 g des Reaktionsprodukts aus Beispiel 11b auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt.

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein trübes und viskoses Produkt erhalten.

Das Produkt enthält 28 Gew.-% Harnstoffverbindung.

### Komposition K5:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 239,1 g eines Gemischs des Reaktionsprodukts aus Beispiel 15b vorgelegt und unter Stickstoffatmosphäre unter Rühren auf 120°C erwärmt. 5,1 g Lithiumchlorid werden zugegeben und bei dieser Temperatur unter Rühren in 1 Stunde gelöst. Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein trübes und viskoses Produkt erhalten. Das Produkt enthält 23 Gew.-% Harnstoffverbindung.

### Komposition K6:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 31,2 g des Reaktionsprodukts aus Beispiel 14b vorgelegt und unter Stickstoffatmosphäre unter Rühren auf 120°C erwärmt. 0,7 g Lithiumchlorid werden zugegeben und bei dieser Temperatur unter Rühren in 1 Stunde gelöst.

Anschließend wird Temperatur auf 80°C gesenkt. Es werden 3,0 g m-Xylylendiamin zugegeben und die Mischung homogenisiert.

17,1 g des in Stufe 1 hergestellten Isocyanataddukts werden unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Das Produkt enthält 39 Gew.% der Harnstoffverbindung.

### Komposition K7:

### Stufe 1

Zunächst wird ein Monoaddukt gemäß der Patentschrift EP 1188779 aus 2 ,4-Toluylendiisocyanat (Desmodur T100, Bayer) und 1-Dodecanol hergestellt.

### Stufe 2

In einem Reaktionsgefäß (Rundkolben mit Rührer, Rückflusskühler und Tropftrichter) werden unter Stickstoffatmosphäre und Rühren 12,6 g (0,3 mol) LiCl in 280 g des Reaktionsprodukts aus Beispiel 1b gelöst. Danach werden 13,6 g (0,125 mol) meta-Xylylendiamin zugegeben und die klare Mischung auf 80 °C erwärmt. Anschließend werden 72,0 g (0,20 mol) des beschriebenen Isocyanataddukts (Stufe 1) unter Rühren innerhalb von 1 Stunde zugetropft, so dass die Temperatur nicht über 85°C steigt. Zur Vervollständigung der Reaktion wird das Reaktionsgemisch für 3 Stunden bei 80°C gerührt. Es wird ein klares und viskoses Produkt erhalten. Der Anteil der Harnstoffverbindung im erhaltenen Produkt ist 23 Gew.%.

### Komposition K8:

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 162,0 g des Reaktionsprodukts aus Beispiel 1b auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt.

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein viskoses, bräunliches Produkt erhalten.

Das Produkt enthält 38 Gew.-% Harnstoffverbindung.

### Komposition K9:

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 252,0 g des Reaktionsprodukts aus Beispiel 14b auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein trübes, bräunliches Produkt erhalten. Die Aminzahl liegt bei 3 mg KOH/g (bestimmt gemäß DIN 16945). Das Produkt enthält 29 Gew.-% Harnstoffverbindung.

### Komposition K10:

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 324,0 g des Reaktionsprodukts aus Beispiel 16b auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein bräunliches Produkt erhalten. Das Produkt enthält 24 Gew.-% Harnstoffverbindung.

### Vergleichsbeispiele (nicht erfindungsgemäß)

### Vergleichsbeispiel V1:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g 1-Ethylpyrrolidin-2-on vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945).Das Produkt enthält 49 Gew.-% der Harnstoffverbindung.

### Vergleichsbeispiel V2:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g Dimethylsulfoxid vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945).Das Produkt enthält 49 Gew.-% der Harnstoffverbindung.

### Vergleichsbeispiel V3:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g N-Methylpyrrolidon vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, gelbes Produkt erhalten. Das Produkt enthält 49 Gew.-% der Harnstoffverbindung.

### Vergleichsbeispiel V4:

Zunächst wird ein Monoaddukt gemäß der Patentschrift EP 1188779 aus 2,4-Toluylendiisocyanat (Desmodur T100, Bayer) und Laurylalkohol hergestellt.

In einem Reaktionsgefäß (Rundkolben mit Rührer, Rückflusskühler und Tropftrichter) werden unter Stickstoffatmosphäre und Rühren 1,7 g (0,039 mol) LiCl in 75 g N-Methylpyrrolidon (handelsübliche Ware) gelöst. Danach werden 3,6 g (0,026 mol) meta-Xylylendiamin zugegeben und die klare Mischung auf 80 °C erwärmt.

Anschließend werden 19,8 g (0,052 mol) des Monoaddukts aus Desmodur T100 und Laurylalkohol unter Rühren innerhalb von 1 Stunde zugetropft, so dass die Temperatur nicht über 85°C steigt. Zur Vervollständigung der Reaktion wird das Reaktionsgemisch für 3 Stunden bei 80°C gerührt. Es wird ein klares und flüssiges Produkt erhalten. Der Anteil der Harnstoffverbindung im erhaltenen Produkts ist 23 Gew.%.

### Vergleichsbeispiel V5:

Zunächst wird ein Monoaddukt gemäß der Patentschrift EP 1188779 aus 2,4-Toluylendiisocyanat (Desmodur T100, Bayer) und Laurylalkohol hergestellt.

In einem Reaktionsgefäß (Rundkolben mit Rührer, Rückflusskühler und Tropftrichter) werden unter Stickstoffatmosphäre und Rühren 1,7 g (0,039 mol) LiCl in 75 g 1-N-Ethylpyrrolidon (handelsübliche Ware) gelöst. Danach werden 3,6 g (0,026 mol) meta-Xylylendiamin zugegeben und die klare Mischung auf 80 °C erwärmt.

Anschließend werden 19,8 g (0,052 mol) des Monoaddukts aus Desmodur T100 und Laurylalkohol unter Rühren innerhalb von 1 Stunde zugetropft, so dass die Temperatur nicht über 85°C steigt. Zur Vervollständigung der Reaktion wird das Reaktionsgemisch für 3 Stunden bei 80°C gerührt. Es wird ein klares und niedrigviskoses Produkt erhalten. Der Anteil der Harnstoffverbindung im erhaltenen Produkt ist 23 Gew.%.

### Vergleichsbeispiel V6:

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 99,7g N-Methylpyrrolidon (handelsübliche Ware BASF) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst.

Anschließend wird die Temperatur auf 80°C gesenkt.

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein klares, gelbliches Produkt erhalten. Das Produkt enthält 48 Gew.-% Harnstoffverbindung.

### Vergleichsbeispiel V7:

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 132,0g Dimethylsulfoxid (handelsübliche Ware der Firma Sigma Aldrich) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein klares, gelbliches Produkt erhalten. Das Produkt enthält 43 Gew.-% Harnstoffverbindung.

### Vergleichsbeispiel V8:

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 99,7g N-Ethylpyrrolidon (handelsübliche Ware BASF) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt.

Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein klares, gelbliches Produkt erhalten. Das Produkt enthält 50 Gew.-% Harnstoffverbindung.

### Vergleichsbeispiel V11:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g Methyl-5-(dimethylamino)-2-methyl-5-oxopentanoat vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945).Das Produkt enthält 38 Gew.-% der Harnstoffverbindung.

### Vergleichsbeispiel V12:

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g 1-(Morpholin-4-yl)ethanon vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst.

Anschließend wird Temperatur auf 80°C gesenkt. Es werden 10,2 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945). Das Produkt enthält 38 Gew.-% der Harnstoffverbindung.

### Vergleichsbeispiel V13: Kombination von nicht-erfindungsgemäßen Amidverbindungen mit Harnstoffverbindungen

Für die folgenden Kombinationsversuche wird analog zu WO 2011/091812 als nichterfindungsgemäße Amidverbindung BYK-430 (30%-ige Lösung eines hochmolekularen modifizierten Polyamids, Fa. BYK-Chemie GmbH) eingesetzt.

Diese Amidkomponente wurde mit verschiedenen Harnstoffverbindungen gemäß o.a. Vergleichsbeispiele kombiniert (d.h. gelöste Harnstoffverbindungen, die keine erfindungsgemäße Amidkomponente als Mischbestandteil enthalten). Die Mischung erfolgte unter kontinuierlichem Rühren.

| Bsp. | HarnstoffLösung | Gewichtsverhältnis Harnstofflösung zu BYK-430 | Aussehen der Kombination |
|---|---|---|---|
| V13-1 | V3 (410) | 7 : 3 | leicht trüb, geliert |
| V13-2 | V3 (410) | 5 : 5 | leicht trüb, geliert |
| V13-3 | V3 (410) | 3 : 7 | stark trüb, geliert |
| V13-4 | V6 (420) | 7 : 3 | leicht trüb, geliert |
| V13-5 | V6 (420) | 5 : 5 | trüb, geliert |
| V13-6 | V6 (420) | 3 : 7 | trüb, geliert |

Das Beispiel zeigt, dass die erfindungsgemäßen Kompositionen eine gute Verträglichkeit der betreffenden Harnstoff- und Amidkomponenten gewährleisten, was zu einer guten Herstellbarkeit bei gleichzeitig guter Lagerstabilität der rheologisch wirksamen Kompositionen enthaltend Amid und Harnstoff führt, während die nicht-erfindungsgemäßen Amidverbindungen keine lagerstabile Kombination und daher auch nicht die einfache Handhabung als Gesamtkomposition erlaubt. Bei den nicht-erfindungsgemäßen Kombinationen muss eine Einarbeitung ins System daher immer separat erfolgen, d.h. es sind mehr Arbeitsschritte und daher produktionstechnischer Mehraufwand erforderlich.

### Anwendungstechnische Prüfung der als Rheologieadditiv geeigneten Kompositionen

### Prüfsystem 1: Lösemittelmischung aus n-Butylacetat und Methoxypropanol

Für diese Prüfserie werden - falls erforderlich - durch Zugabe einer weiteren Menge der jeweiligen Amidverbindung zur Komposition für alle geprüften Produkte ein Gehalt der Harnstoffverbindung von 28 Gew.% in der Additivkomposition eingestellt. In einer 100 ml-Glasflasche werden 50 g der Lösungsmittelmischung n-Butylacetat/Dowanol PM 75:25 (w/w) vorgelegt und anschließend eine Menge der jeweiligen Additivkomposition zugesetzt, welche 0,5% Gew.% der Harnstoffverbindung entspricht. Hierzu wird unter Rühren mit dem Dispermat CV (Zahnscheibe d = 2,5 cm bei 1000 U/min.) eingearbeitet. Nach erfolgter Zugabe wird noch 1 Minute weitergerührt.

Anschließend lässt man die Proben 1 Stunde bei RT stehen und beurteilt anschließend visuell die Gelstärke als Maß für die rheologische Wirksamkeit und die Verträglichkeit des Additivs anhand der Trübung.

### Bewertungsskala:

### Gelstärke:

| | |
|---|---|
| 1 | sehr stark |
| 2 | Stark |
| 3 | Mittel |
| 4 | sehr schwach |
| 5 | kein Gel |

### Trübung (Verträglichkeit):

| | |
|---|---|
| 1 | Klar |
| 2 | leicht trüb |
| 3 | Trüb |
| 4 | stark trüb |
| 5 | sehr stark trüb |

### Ergebnisse:

| **Komposition** | **Gelstärke** | **Trübung** |
|---|---|---|
| *(jeweils enthaltend 28 Gew. % Harnstoff)* | | |
| control | 5 | 1 |
| Vergleichsbsp. V1 | 4 | 2 |
| K1 | 3 | 1 |
| K2 | 3 | 1 |
| K4 | 4 | 1 |
| K3 | 4 | 1 |
| K6 | 3 | 2 |

Anhand der Ergebnisse ist ersichtlich, dass die erfindungsgemäßen Kompositionen im Vergleich zum Vergleichsbeispiel V1 entweder eine bessere Verträglichkeit (d.h. weniger Trübung im System) erlauben oder den Aufbau einer höheren Gelstärke (d.h. bessere rheologische Wirksamkeit) erlauben oder beide vorteilhaften Effekte in Kombination zeigen.

### Prüfsystem 2: Setalux D A 870 BA Klarlack

Für diese Prüfserie werden - falls erforderlich - durch Zugabe einer weiteren Menge der jeweiligen Amidverbindung zur Komposition für alle geprüften Produkte ein Gehalt der Harnstoffverbindung von 28 Gew.% in der Additivkomposition eingestellt. In einer 100 ml-Glasflasche werden 50 g Setalux D A 870 BA Klarlack vorgelegt und anschließend das
jeweilige Additiv unter Rühren mit dem Dispermat CV (Zahnscheibe d = 2,5 cm bei 1000 U/min.) eingearbeitet. Die Menge der Additivkomposition wird jeweils so gewählt, dass sie 0,4 Gew.% bezogen auf die Harnstoffverbindung entspricht. Nach erfolgter Zugabe wird noch 1 Minute weitergerührt.

Anschließend lässt man die Proben 1 Tag bei RT stehen und beurteilt anschließend zunächst visuell die Gelstärke als Maß für die rheologische Wirksamkeit und die Verträglichkeit des Additivs anhand der Trübung. Danach erfolgt die Prüfung des Standvermögens als Maß der rheologischen Wirksamkeit unter Applikationsbedingungen.

Hierzu wird die Probe mit dem Spatel gleichmäßig durchgerührt und dann mit dem Stufenrakel 30-300 µm und einer automatischen Aufziehbank von BYK Gardner bei einer Geschwindigkeit von 5 cm/s auf Kontrastkarten appliziert. Nach der Applikation werden die Kontrastkarten direkt horizontal zur Trocknung aufgehängt. Nach der Trocknung wird die Schichtdicke in µm naß bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Lackformulierung (Gewichtsteile):

| | |
|---|---|
| **Setalux D A 870** | |
| **BA** | **80,0** |
| **Butylacetat** | **9,9** |
| **Dowanol PMA** | **9,9** |
| **BYK-066** | **0,2** |

### Ergebnisse:

| **Komposition** | **Gelstärke** | **Trübung** | **Standvermögen** |
|---|---|---|---|
| *(jeweils enthaltend 28 Gew.% Harnstoff)* | | | **µm naß** |
| control | 5 | 1 | 30 |
| Vergleichsbsp. V3 | 2 | 2 | 90 |
| K1 | 1 | 1 | 150 |
| K2 | 1 | 2 | 450 |
| K4 | 2 | 1 | 200 |
| K3 | 1-2 | 2 | 400 |

Anhand der Ergebnisse ist ersichtlich, dass die erfindungsgemäßen Kompositionen im Vergleich zum Vergleichsbeispiel V3 entweder eine bessere Verträglichkeit (d.h. weniger Trübung im System) erlauben oder den Aufbau einer höheren Gelstärke sowie ein verbessertes Standvermögen (d.h. maximal mögliche Schichtdicke) erlauben oder die vorteilhaften Effekte in Kombination zeigen.

### Prüfsystem 3: Epikote 1001-X75 - Klarlack

Für diese Prüfserie werden - falls erforderlich - durch Zugabe einer weiteren Menge der jeweiligen Amidverbindung zur Komposition für alle geprüften Produkte ein Gehalt der Harnstoffverbindung von 38 Gew.% in der Additivkomposition eingestellt. In einer 100 ml-Glasflasche werden 50 g Epikote 1001-X75 Klarlack vorgelegt und anschließend das jeweiligen Additiv unter Rühren mit dem Dispermat CV (Zahnscheibe d = 2,5 cm bei 1000 U/min.) eingearbeitet. Es wird jeweils eine Menge gewählt, welche 0,8 Gew.% der Harnstoffverbindung entspricht. Nach erfolgter Zugabe wird noch 1 Minute weitergerührt.

Anschließend lässt man die Proben 1 Tag bei RT stehen und beurteilt anschließend zunächst visuell die Gelstärke als Maß für die rheologische Wirksamkeit und die Verträglichkeit des Additivs anhand der Trübung. Danach erfolgt die Prüfung des Standvermögens als Maß der rheologischen Wirksamkeit unter Applikationsbedingungen.

Hierzu wird die Probe mit dem Spatel gleichmäßig durchgerührt und dann mit dem Stufenrakel 30-300 µm und einer automatischen Aufziehbank von BYK Gardner bei einer Geschwindigkeit von 5cm/s auf Kontrastkarten appliziert. Nach der Applikation werden die Kontrastkarten direkt horizontal zur Trocknung aufgehängt. Nach der Trocknung wird die Schichtdicke in µm naß bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Lackformulierung (Gewichtsteile):

| | |
|---|---|
| Epikote | |
| 1001-X75 | 75,3 |
| Methylisobutylketon | 17,3 |
| Isobutanol | 7,4 |

### Ergebnisse:

| **Komposition** | **Gelstärke** | **Trübung** | **Standvermögen** |
|---|---|---|---|
| *(jeweils enthaltend 38 Gew. % Harnstoff)* | | | **µm naß** |
| control | 5 | 1 | < 50 |
| Vergleichsbsp. V3 | 3 | 1 | 200 |
| K1 | 2 | 1 | 300 |

Anhand der Ergebnisse ist ersichtlich, dass die'erfindungsgemäßen Komposition im Vergleich zum Vergleichsbeispiel V3 bei gleich guter Verträglichkeit eine höhere Gelstärke sowie ein verbessertes Standvermögen (d.h. maximal mögliche Schichtdicke) erlaubt.

### Prüfsystem 4: Worleekyd S 351 Bindemittel

In einer 100 ml-Glasflasche werden 50 g Worleekyd S351 Bindemittel vorgelegt und anschließend des jeweiligen Additivs unter Rühren mit dem Dispermat CV (Zahnscheibe d = 2,5 cm bei 1000 U/min.) eingearbeitet. Es wird jeweils eine Menge gewählt, welche 0,7 Gew.% der Harnstoffverbindung entspricht. Nach erfolgter Zugabe wird noch 1 Minute weitergerührt.

Anschließend läßt man die Proben 1 Tag bei RT stehen und beurteilt dann das Standvermögen als Maß der rheologischen Wirksamkeit unter

Applikationsbedingungen. Hierzu wird die Probe mit dem Spatel gleichmäßig durchgerührt und dann mit dem Stufenrakel 50-500 µm und einer automatischen Aufziehbank von BYK Gardner bei einer Geschwindigkeit von 5cm/s auf Kontrastkarten appliziert. Nach der Applikation werden die Kontrastkarten direkt horizontal zur Trocknung aufgehängt. Nach der Trocknung wird die Schichtdicke in µm naß bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Ergebnisse:

| **Komposition** | **Gelstärke** | **Trübung** | **Standvermögen** |
|---|---|---|---|
| *(jeweils enthaltend 23 Gew. % Harnstoff)* | | | **µm naß** |
| Control | 5 | 1 | < 50 |
| Vergleichsbsp. V4 | 3 | 3 | 300 |
| Vergleichsbsp. V5 | 3-4 | 3 | 350 |
| K7 | 1 | 2 | 450 |

Anhand der Ergebnisse ist ersichtlich, dass die erfindungsgemäßen Komposition im Vergleich zu den Vergleichsbeispielen V4 und V5 bei gleichzeitig verbesserter Verträglichkeit eine höhere Gelstärke sowie ein verbessertes Standvermögen (d.h. maximal mögliche Schichtdicke) erlaubt.

### Prüfsystem 5: Worléekyd S 366 Klarlack

In einer 100 ml-Glasflasche werden 50 g Worleekyd S366 Klarlack vorgelegt und anschließend das jeweilige Additiv unter Rühren mit dem Dispermat CV (Zahnscheibe d = 2,5 cm bei 1000 U/min.) eingearbeitet. Es wird jeweils eine Menge gewählt, welche 0,5 Gew.% der Harnstoffverbindung entspricht. Nach erfolgter Zugabe wird noch 1 Minute weitergerührt. Anschließend läßt man die Proben 1 Tag bei RT stehen und beurteilt dann das Standvermögens als Maß der rheologischen Wirksamkeit unter Applikationsbedingungen.

Hierzu wird die Probe mit dem Spatel gleichmäßig durchgerührt und dann mit dem Stufenrakel 50-500 µm und einer automatischen Aufziehbank von BYK Gardner bei einer Geschwindigkeit von 5cm/s auf Kontrastkarten appliziert. Nach der Applikation werden die Kontrastkarten direkt horizontal zur Trocknung aufgehängt. Nach der Trocknung wird die Schichtdicke in µm naß bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Lackformulierung (Gewichtsteile):

| | |
|---|---|
| **Worleekyd S 366 60% in Isopar H** | **80,9** |
| **Isopar H** | **16,0** |
| **Nuodex Combi APB** | **2,6** |
| **Borchi Nox M 2** | **0,3** |
| **BYK-066** | **0,2** |

### Ergebnisse:

| **Komposition** | **Gelstärke** | **Standvermögen** |
|---|---|---|
| *(jeweils enthaltend 23 Gew. % Harnstoff)* | **Visuell** | **µm naß** |
| control | 5 | 50 |
| Vergleichsbsp. V4 | 3-4 | 150 |
| K7 | 1 | 300 |

Anhand der Ergebnisse ist ersichtlich, dass die erfindungsgemäße Komposition im Vergleich zum Vergleichsbeispiel V4 eine deutlich erhöhte Gelstärke sowie ein verbessertes Standvermögen (d.h. maximal mögliche Schichtdicke) erlaubt.

### Prüfsystem 6: Polystyrol Palapreg P17-02 / Palapreg H 814-01

In einem 175 ml-PE-Becher werden zunächst die beiden Harzkomponenten Palapreg P 17-02 und Palapreg H 814-01 mit dem Dispermat CV 1 min. bei 1200 U/min. mit einer 4 cm-Zahnscheibe homogenisiert. 50 g dieser Mischung werden anschließend in einem 175 ml-PE-Becher vorgelegt und das jeweilige Additiv unter Rühren mit dem Dispermat CV (Zahnscheibe d = 2,5 cm bei 1000 U/min.) eingearbeitet. Es wird jeweils eine Menge gewählt, welche 0,8 Gew.% der Harnstoffverbindung entspricht. Nach erfolgter Zugabe wird noch 2 Minuten weitergerührt.

Anschließend füllt man die Proben direkt in 50 ml-Schnappdeckelgläser und lässt sie bei RT stehen. Nach 3 Tagen erfolgt die Beurteilung der Separation der Proben in % bezogen auf die Gesamtfüllmenge, sowie eine visuelle Bewertung der Gelstärke als Maß für die rheologische Wirksamkeit. Je geringer die Separation der Proben ist, desto besser ist die rheologische Wirksamkeit der Proben. Neben der rheologischen Wirksamkeit spielt auch Farbeinfluss durch das Additiv auf die Formulierung eine Rolle, der möglichst gering sein muss. Gleichzeitig ist ein hoher Siedepunkt der Amidverbindung für eine Anwendung im Bereich Sheet Moulding Compounds relevant, da es bei deren Heißverpressung sonst zur Belastung der Raumluft kommt und entstehende Gasbläschen zu unerwünschten Lufteinschlüssen im verpressten Compound führen.

### Harzformulierung (Gewichtsteile):

| | |
|---|---|
| Palapreg P 17-02 | 70 |
| Palapreg H 814-01 | 30 |

### Ergebnisse:

| **Komposition** | **Gelstärke** | **Separation nach 3 Tagen bei Raumtemperatur** |
|---|---|---|
| *(jeweils enthaltend 38 Gew. % Harnstoff)* | **Visuell** | **%** |
| control | | 38 |
| Vergleichsbsp. V11 | 5 | 37 |
| Vergleichsbsp. V12 | 5 | 38 |
| K1 | 1 | 0 |

Anhand der Ergebnisse ist ersichtlich, dass die erfindungsgemäße Komposition im Vergleich zu den Vergleichsbeispielen V11 und V12 einen deutlichen Einfluss auf die unerwünschte Phasenseparation hat und infolge der Erhöhung der Gelstärke eine Separation effektiv und komplett unterbindet.

## Patentansprüche

1. Komposition enthaltend
i) 15 - 95 Gew.-% einer Amidverbindung (A),
ii) 5 - 75 Gew.-% einer Harnstoffverbindung (B),
iii) 0 - 50 Gew.-% einer ionogenen Verbindung (C) und
iv) 0 - 35 Gew.-% eines organischen Lösemittels (D),
wobei die Amidverbindung (A) eine molare Masse von 70 bis 600 g/mol aufweist, die Amidverbindung (A) maximal eine Amidgruppe enthält, an deren Stickstoffatom Wasserstoff gebunden ist, die Amidverbindung (A) keine Harnstoffgruppe, kein Phosphor, kein Silizium sowie kein Halogen aufweist und die Amidverbindung (A) gemäß der allgemeinen Formel (I) vorliegt, 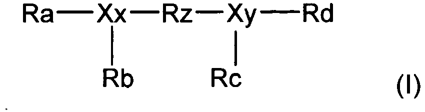 mit
Xx gleich oder verschieden sowie repräsentiert durch eine Amidgruppe C(=O)-N, die mit Rz, Ra und Rb verknüpft ist gemäß einer der allgemeinen Formeln RzC(=O)-NRaRb (Xx1), RaC(=O)-NRzRb (Xx2) sowie RbC(=O)-NRzRa (Xx3)
Xy gleich oder verschieden sowie repräsentiert durch eine Amidgruppe C(=O)-N, die mit Rz, Rc und Rd verknüpft ist gemäß einer der allgemeinen Formeln RzC(=O)-NRcRd (Xy1), RcC(=O)-NRzRd (Xy2) sowie RdC(=O)-NRzRc (Xy3)
Rz jeweils gleich oder verschieden sowie repräsentiert durch einen verzweigten oder unverzweigten, gesättigten oder ungesättigten, 1 bis 32 Kohlenstoffatome aufweisenden Kohlenwasserstoffrest, welcher als Heteroatome enthaltende Gruppen ausschließlich Amino- und/oder Amidgruppen enthalten kann,
Ra, Rb, Rc, Rd, jeweils gleich oder verschieden sowie jeweils unabhängig voneinander repräsentiert durch Wasserstoff und/ oder einen verzweigten oder unverzweigten, gesättigten oder ungesättigten, 1 bis 16 Kohlenstoffatome enthaltenden organischen Rest und zwar mit der Maßgabe, dass
Ra, Rb, Rc und Rd in der Gesamtheit mindestens 4 Kohlenstoffatome aufweisen,
maximal einer der Reste aus der Gruppe Ra, Rb, Rc und Rd in Form von Wasserstoff vorliegt,
Ra und Rb und/oder Rc mit Rd zusammen mit der Ra mit Rb und/ oder Rc mit Rd verbindenden Gruppierung CO-N gemäß der allgemeinen Formel (*α*-*1)* gemeinsam einen Zyklus mit 4 bis 10 Ringatomen ausbilden können und/ oder 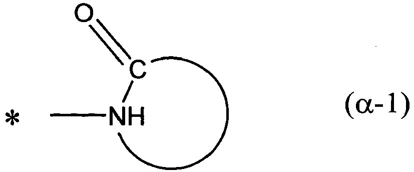
Ra und Rb und/oder Rc mit Rd zusammen mit dem Ra mit Rb und/ oder Rc mit Rd verbindenden N-Atom gemäß der allgemeinen Formel *(β-1)* gemeinsam einen Zyklus mit 4 bis 7 Ringatomen ausbilden können oder 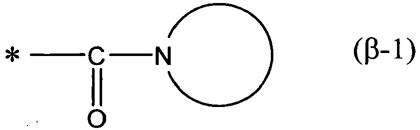
Rb und Rc zusammen mit dem jeweils an Rb und Rc gebundenen N-Atom sowie dem Rest Rz gemäß der allgemeinen Formel (*γ-1*) einen Zyklus mit 5 bis 7 Ringatomen ausbilden können 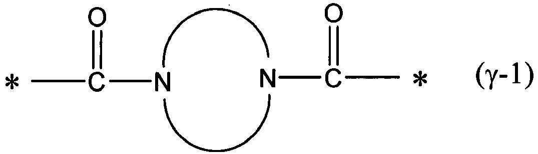
Ra, Rb, Rc, Rd und Rz in der Gesamtheit maximal 36 Kohlenstoffatome sowie maximal 8 Heteroatome aus der Gruppe N und O aufweisen,
die Harnstoffverbindung (B) ein Molekulargewicht von wenigstens 350 g/mol sowie mindestens eine Harnstoffgruppe aufweist,
die ionogene Verbindung (C) eine kationische sowie eine anionische Komponente enthält und sich von der Amidverbindung (A) sowie von der Harnstoffverbindung (B) unterscheidet und
das organische Lösemittel (D) keine Harnstoffgruppe sowie keine ionische Gruppe enthält sowie maximal zwei Heteroatome ausgewählt aus der Gruppe bestehend aus Stickstoff und Sauerstoff, aufweist.

2. Komposition nach Anspruch 1 enthaltend
i) 30 - 90 Gew.-% der Amidverbindung (A),
ii) 8 - 55 Gew.-% der Harnstoffverbindung (B),
iii) 0 - 15 Gew.-% der ionogene Verbindung (C) und
iv) 2 - 25 Gew.-% des organischen Lösemittels (D).

3. Komposition nach Anspruch 1 oder 2, **dadurch gekennzeichnet, dass** einerseits 50 - 100 Gew.-% der Amidverbindung (A) keine Amidgruppe aufweist, an deren Stickstoffatom Wasserstoff gebunden ist und andererseits diese 50 - 100 Gew.-% der Amidverbindung (A) außerdem gemäß einer allgemeinen Formel (I) vorliegen, in der keiner der Reste aus der Gruppe Ra, Rb, Rc und Rd durch Wasserstoff repräsentiert werden.

4. Komposition nach einem der Ansprüche 1 bis 3, **dadurch gekennzeichnet, dass** 50 - 100 Gew.-% der Amidverbindung (A) gemäß der allgemeinen Formel (la) vorliegt

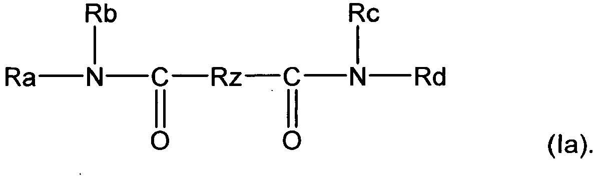

5. Komposition nach einem der Ansprüche 1 bis 4, **dadurch gekennzeichnet, dass** 50 - 100 Gew.-% der Amidverbindung (A) gemäß der allgemeinen Formel (la) vorliegt, wobei Ra und Rb und/oder Rc mit Rd zusammen mit dem Ra mit Rb und/ oder Rc mit Rd verbindenden N-Atom gemäß der allgemeinen Formel *(β-1)* gemeinsam einen verzweigten oder unverzweigten, gesättigten oder ungesättigten Zyklus mit 4 bis 7 Ringatomen ausbilden, welcher maximal zwei Heteroatome aus der Gruppe bestehend aus O und N aufweist.

6. Komposition nach einem der Ansprüche 1 bis 4, **dadurch gekennzeichnet, dass** 50 - 100 Gew.-% der Amidverbindung (A) gemäß der allgemeinen Formel (la) vorliegt, wobei Ra, Rb, Rc und/ oder Rd jeweils nicht in Zyklen enthalten sind.

7. Komposition nach einem der Ansprüche 1 bis 3, **dadurch gekennzeichnet, dass** die allgemeinen Formel (I) für 50 - 100 Gew.-% der Amidverbindung (A) gemäß der allgemeinen Formel (Ib) vorliegt

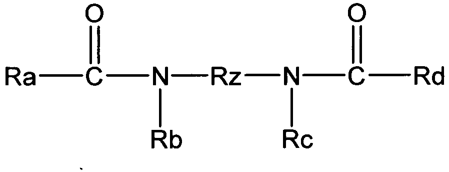

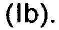

8. Komposition nach einem der Ansprüche 1, 2, 3 und 7, **dadurch gekennzeichnet, dass** die allgemeinen Formel (I) für 50 - 100 Gew.-% der Amidverbindung (A) gemäß der allgemeinen Formel (Ib) vorliegt, wobei Rb und Rc zusammen mit dem jeweils an Rb und Rc gebundenen N-Atom sowie dem Rest Rz gemäß der allgemeinen Formel (*γ-1*) einen verzweigten oder unverzweigten, gesättigten oder ungesättigten Zyklus mit 5 bis 7 Ringatomen ausbilden, welcher maximal zwei Heteroatome aus der Gruppe bestehend aus O und N aufweist.

9. Komposition nach einem der Ansprüche 1,2,3 und 7, **dadurch gekennzeichnet, dass** die allgemeinen Formel (I) für 50 - 100 Gew.-% der Amidverbindung (A) gemäß der allgemeinen Formel (Ib) vorliegt, wobei Ra und Rb und/oder Rc mit Rd zusammen mit der Ra mit Rb und/ oder Rc mit Rd verbindenden Gruppierung CO-N gemäß der allgemeinen Formel (*α*-*1)* gemeinsam einen verzweigten oder unverzweigten, gesättigten oder ungesättigten Zyklus mit 4 bis 10 Ringatomen ausbilden, welcher maximal zwei Heteroatome aus der Gruppe bestehend aus O und N aufweist.

10. Komposition nach einem der Ansprüche 1 bis 9, **dadurch gekennzeichnet, dass** 70 - 100 Gew.-% der Harnstoffverbindung (B) entweder mindestens zwei Harnstoffgruppen oder mindestens eine Harnstoffgruppe und mindestens eine Urethangruppen aufweist.

11. Komposition nach einem der Ansprüche 1 bis 10, **dadurch gekennzeichnet, dass** 50 - 100 Gew.-% der Harnstoffverbindung (B) gemäß der allgemeinen Formel (II) vorliegt
R³¹-[R³³-Z-R³⁴-W-]ₙR³² (II)
mit
R³¹ und R³² jeweils gleich oder verschieden sowie jeweils unabhängig voneinander repräsentiert durch einen verzweigten oder unverzweigten, gesättigten oder ungesättigten 1 - 100 Kohlenstoffatome enthaltenden organischen Rest, der maximal jeweils eine Harnstoffgruppe und maximal jeweils eine Urethangruppe aufweist,
R³³ und R³⁴ jeweils gleich oder verschieden sowie jeweils unabhängig voneinander repräsentiert durch 1 - 300 Kohlenstoffatome enthaltende , optional Ethergruppen enthaltende verzweigte oder unverzweigte Polyesterreste, 2 - 300 Kohlenstoffatome enthaltende verzweigte oder unverzweigte Polyetherreste, 1 - 300 Kohlenstoffatome enthaltende verzweigte oder unverzweigte Polyamidreste, 3 bis 100 Siliziumatome enthaltende Polysiloxanreste, verzweigte oder unverzweigte C2-C22-Alkylenreste, verzweigte oder unverzweigte C3-C18-Alkenylenreste, C5-C12-Arylenreste und/ oder verzweigte oder unverzweigte C7-C22 Arylalkylenreste,
Z und W jeweils gleich oder verschieden sowie jeweils unabhängig voneinander repräsentiert durch NH-CO-O und/ oder NH-CO-NH,
n jeweils gleich oder verschieden sowie repräsentiert durch eine ganze Zahl von 1 bis 150, bevorzugt von 2 bis 120.

12. Komposition nach einem der Ansprüche 1 bis 11, **dadurch gekennzeichnet, dass** 50 - 100 Gew.-% der Harnstoffverbindung (B) jeweils ein Molekulargewicht von 2000 bis 55000 sowie 4 - 150 Harnstoffgruppen aufweist.

13. Komposition nach einem der Ansprüche 1 bis 12, **dadurch gekennzeichnet, dass** 50 - 100 Gew.-% der Harnstoffverbindung (B) jeweils vorliegen gemäß einer der allgemeinen Formeln ausgewählt aus der Gruppe bestehend aus (IIIa), (IIIb), (IIIc) und (IIId) 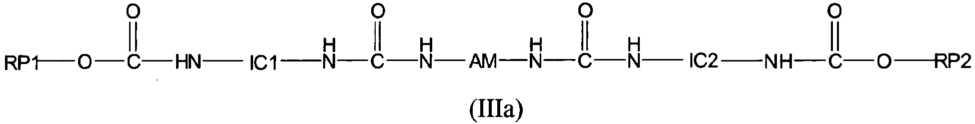 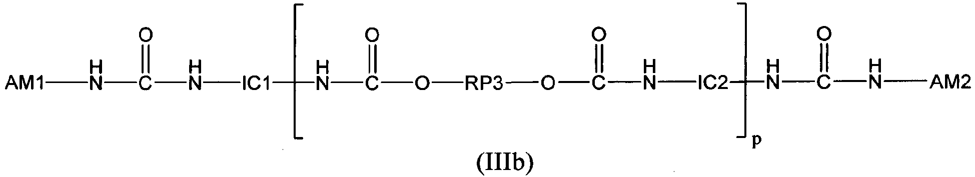 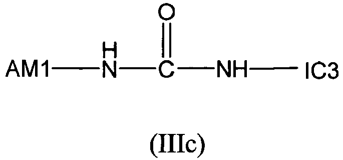 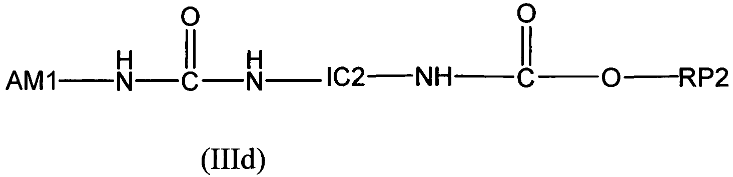 mit
AM gleich oder verschieden sowie repräsentiert durch einen linearen oder verzweigten, gesättigten oder ungesättigten, aliphatischen, aromatischen oder aliphatisch-aromatischen organischen Rest mit 2 bis 50 C-Atomen,
AM1 sowie AM2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 50 C-Atomen,
IC1 sowie IC2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen Kohlenwasserstoffrest mit 2 bis 40 C-Atomen,
IC3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 Kohlenstoffatomen,
RP1 sowie RP2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 24 C-Atomen und/ oder durch einen Polyetherrest mit 1 bis 120 Ethersauerstoffatomen und/ oder durch einen optional Ethergruppen enthaltenden Polyesterrest mit 1 bis 100 Estergruppen und/ oder durch einen Polyamidrest mit 1 bis 100 Amidgruppen und/ oder durch einen Polysiloxanrest mit 3 bis 100 Siliziumatomen,
RP3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 C-Atomen und/ oder durch einen (Poly)etherrest mit 1 bis 120 Ethersauerstoffatomen und/ oder durch einen Polyamidrest mit 1 bis 100 Amidgruppen und/ oder durch einen Polysiloxanrest mit 3 bis 100 Siliziumatomen und/oder durch einen optional Ethergruppen enthaltender Polyesterrest mit 1 bis 100 Estergruppen und
p gleich oder verschieden sowie repräsentiert durch 0 und/ oder 1.

14. Komposition nach Anspruch 13, **dadurch gekennzeichnet, dass** 70 - 100 Gew.-% der Harnstoffverbindung (B) jeweils vorliegen gemäß einer der allgemeinen Formeln ausgewählt aus der Gruppe bestehend aus (IIIa), (IIIb), (IIIb) und (IIId), wobei
AM gleich oder verschieden sowie ausgewählt ist aus der Gruppe bestehend aus 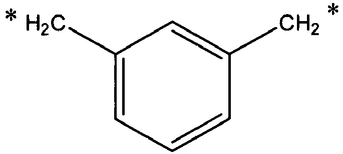 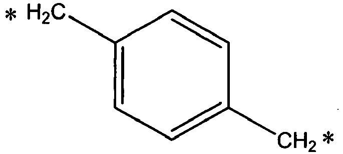 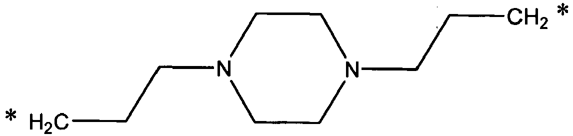 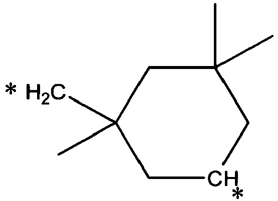 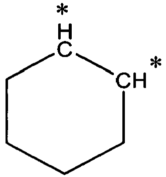 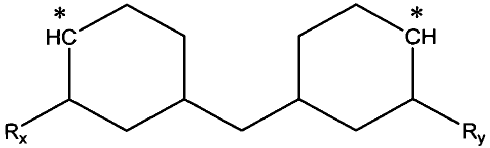 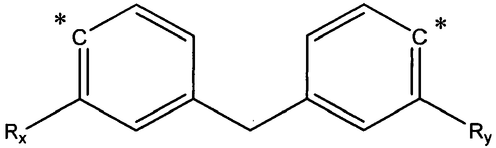 mit Rₓ und R_{y} gleich oder verschieden sowie jeweils unabhängig repräsentiert durch CH₃ und/ oder Wasserstoff,
(CH₂)_{q}
mit q gleich oder verschieden sowie repräsentiert durch eine ganze Zahl von 2 bis 12,
AM1 und AM2 jeweils gleich oder verschieden sowie ausgewählt sind aus der Gruppe bestehend aus n-Propyl, Isopropyl, Butyl, Isobutyl, tert-Butyl, Lauryl, Oleyl, Stearyl, Polyisobutylen und Polyether mit 2 bis 40 Ethersauerstoffatomen, Benzyl, Methylbenzyl, Cyclohexyl, Carboxyalkyl, Hydroxyalkyl und Alkylalkoxysilan.
IC1 und IC2 jeweils gleich oder verschieden sowie ausgewählt sind aus der Gruppe bestehend aus 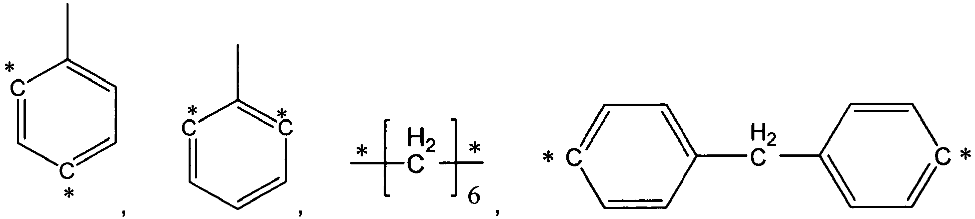 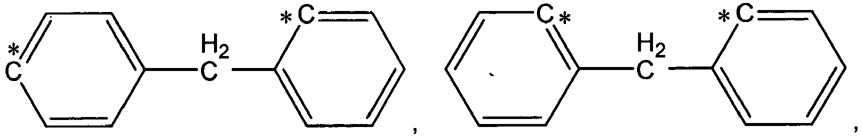 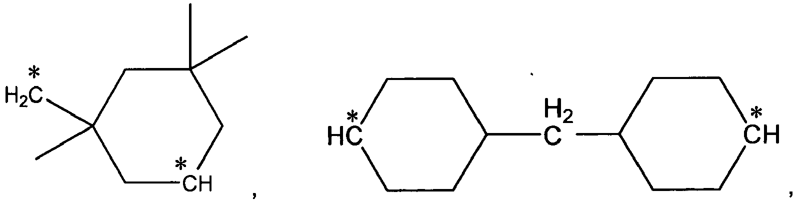 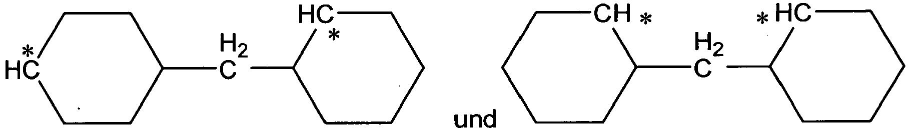 IC3 gleich oder verschieden sowie ausgewählt ist aus der Gruppe bestehend aus Methyl, Ethyl, Phenyl, Benzyl, Cyclohexyl und Stearyl,
RP1 und RP2 jeweils gleich oder verschieden sowie ausgewählt sind aus der Gruppe bestehend aus verzweigtem oder unverzweigtem C1- bis C18-Alkyl, Oleyl, Benzyl, Allyl, bevorzugt Struktureinheiten von Ethylenoxid, Propylenoxid und/ oder Butylenoxid enthaltender Polyetherrest und Struktureinheiten von Epsilon-Caprolacton und/ oder Delta-Valerolacton enthaltender Polyesterrest,
RP3 gleich oder verschieden sowie ausgewählt ist aus der Gruppe bestehend aus linearem oder verzweigtem C1- bis C18-Alkylen, linearem oder verzweigtem C2- bis C18-Alkenylen, bevorzugt Struktureinheiten von Ethylenoxid, Propylenoxid und/ oder Butylenoxid enthaltender Polyether mit 1 bis 25 Ethersauerstoffatomen.

15. Komposition nach einem der Ansprüche 1 bis 13, **dadurch gekennzeichnet, dass** 70 - 100 Gew.-% der Harnstoffverbindung (B) jeweils durch Umsetzung von durch Isocyanurat- und/oder Uretdionbildung oligomerisierten Isocyanaten mit monofunktionellen Aminen herstellbar sind.

16. Komposition nach einem der Ansprüche 1 bis 15, **dadurch gekennzeichnet, dass** 95 - 100 Gew.-%, bevorzugt 98 - 100 Gew.-% der Harnstoffverbindung (B) jeweils mindestens
ein Molekülsegment der allgemeinen Formel (IVa) enthält
-O-CO-NH-Y₁-NH-CO-NH- (IVa)
mit Y₁ gleich oder verschieden sowie repräsentiert durch einen 6 bis 20 Kohlenstoffatome enthaltenden gesättigten oder ungesättigten, verzweigten oder unverzweigten Kohlenwasserstoffrest,
und jeweils kein Molekülsegment der allgemeinen Formel (IVb) enthält
-O-CO-NH-Y₂-NH-CO-O- (IVb)
mit
Y₂ gleich oder verschieden sowie repräsentiert durch einen 6 bis 20 Kohlenstoffatome enthaltenden gesättigten oder ungesättigten, verzweigten oder unverzweigten Kohlenwasserstoffrest.

17. Komposition nach einem der Ansprüche 1 bis 16 enthaltend 0,5 - 4,0 Gew.-% der ionogenen Verbindung (C), wobei 50 - 100 Gew.- % der ionogenen Verbindung (C) als Lithium- oder Calciumsalz, bevorzugt als deren Chlorid, Acetat und/ oder Nitrat, vorliegt.

18. Komposition nach einem der Ansprüche 1 bis 17, welche sich zur Rheologiesteuerung, insbesondere zur Thixotropierung, von flüssigen Systemen eignet.

19. Verwendung einer Komposition gemäß eines der Ansprüche 1 bis 17 zur Rheologiesteuerung, insbesondere zur Thixotropierung, einer flüssigen Mischung.

20. Verwendung nach Anspruch 19, **dadurch gekennzeichnet, dass** die flüssige Mischung vorliegt als Beschichtung, insbesondere als Lack, als Kunststoffformulierung, als Pigmentpaste, als Dichtstoffformulierung, als Kosmetika, als Keramikformulierung, als Klebstoffformulierung, als Vergussmasse, als Bohrspüllösung, als Baustoffformulierung, als Schmierstoff, als Spachtelmasse, als Druckfarbe oder als Tinte.

21. Zubereitung, die als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Bohrspüllösung, als Spachtelmasse, als Druckfarbe oder als Tinte vorliegt und welcher 0,1 bis 7,5 Gew.% einer Komposition gemäß einem der Ansprüche 1 bis 18 zugesetzt worden ist.

## Claims

1. Composition comprising
i) 15-95 wt% of an amide compound (A),
ii) 5-75 wt% of a urea compound (B),
iii) 0-50 wt% of an ionogenic compound (C), and
iv) 0-35 wt% of an organic solvent (D),
where the amide compound (A) has a molar mass of 70 to 600 g/mol, the amide compound (A) contains not more than one amide group with hydrogen bonded to its nitrogen atom, the amide compound (A) has no urea group, no phosphorus, no silicon, and no halogen, and the amide compound (A) is present in accordance with the general formula (I), 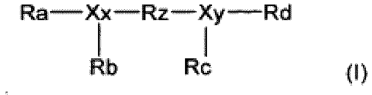 where
Xx is identical or different and is represented by an amide group C(=O)-N which is linked to Rz, Ra, and Rb in accordance with one of the general formulae RzC(=O)-NRaRb (Xx1), RaC(=O)-NRzRb (Xx2), and RbC(=O)-NRzRa (Xx3)
Xy is identical or different and is represented by an amide group C(=O)-N which is linked to Rz, Rc, and Rd in accordance with one of the general formulae RzC(=O)-NRcRd (Xy1), RcC(=O)-NRzRd (Xy2), and RdC(=O)-NRzRc (Xy3)
Rz in each case is identical or different and is represented by a branched or unbranched, saturated or unsaturated hydrocarbon radical which has 1 to 32 carbon atoms and which as heteroatom-containing groups may contain exclusively amino and/or amide groups,
Ra, Rb, Rc, and Rd, in each case identically or differently and in each case independently of one another, are represented by hydrogen and/or a branched or unbranched, saturated or unsaturated organic radical containing 1 to 16 carbon atoms, with the proviso that
Ra, Rb, Rc, and Rd in their entirety have at least four carbon atoms,
not more than one of the radicals from the group of Ra, Rb, Rc, and Rd is present in the form of hydrogen,
Ra and Rb and/or Rc with Rd, together with the CO-N moiety joining Ra to Rb and/or Rc to Rd, may together, in accordance with the general formula (*α-1*), form a cyclic structure having 4 to 10 ring atoms, and/or 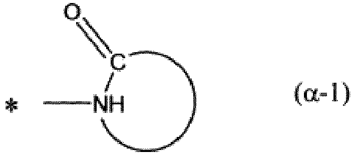
Ra and Rb and/or Rc with Rd, together with the N atom joining Ra to Rb and/or Rc to Rd, may together, in accordance with the general formula (*β-1*), form a cyclic structure having 4 to 7 ring atoms, or 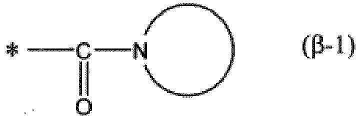
Rb and Rc together with the N atom bonded to each of Rb and Rc, and also with the radical Rz, may, in accordance with the general formula (*γ*-*1*), form a cyclic structure having 5 to 7 ring atoms 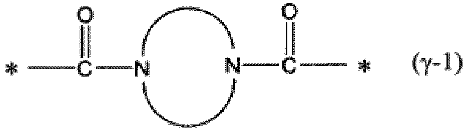
Ra, Rb, Rc, Rd, and Rz in their entirety have not more than 36 carbon atoms and also not more than 8 heteroatoms from the group of N and O,
the urea compound (B) has a molecular weight of at least 350 g/mol and at least one urea group,
the ionogenic compound (C) contains a cationic component and an anionic component and is different from the amide compound (A) and from the urea compound (B), and
the organic solvent (D) contains no urea group and no ionic group and also has not more than two heteroatoms selected from the group consisting of nitrogen and oxygen.

2. Composition according to Claim 1, comprising
i) 30-90 wt% of the amide compound (A),
ii) 8-55 wt% of the urea compound (B),
iii) 0-15 wt% of the ionogenic compound (C), and
iv) 2-25 wt% of the organic solvent (D).

3. Composition according to Claim 1 or 2, **characterized in that** on the one hand 50-100 wt% of the amide compound (A) has no amide group with hydrogen bonded to its nitrogen atom, and on the other hand this 50-100 wt% of the amide compound (A) is also present in accordance with a general formula (I) in which none of the radicals from the group of Ra, Rb, Rc, and Rd is represented by hydrogen.

4. Composition according to any of Claims 1 to 3, **characterized in that** 50-100 wt% of the amide compound (A) is present in accordance with the general formula (Ia)

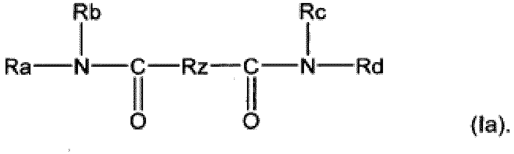

5. Composition according to any of Claims 1 to 4, **characterized in that** 50-100 wt% of the amide compound (A) is present in accordance with the general formula (Ia), where Ra and Rb and/or Rc with Rd, together with the N atom joining Ra to Rb and/or Rc to Rd, in accordance with the general formula (*β-1*), together form a branched or unbranched, saturated or unsaturated cyclic structure having 4 to 7 ring atoms which has not more than two heteroatoms from the group consisting of O and N.

6. Composition according to any of Claims 1 to 4, **characterized in that** 50-100 wt% of the amide compound (A) is present in accordance with the general formula (Ia), where Ra, Rb, Rc and/or Rd in each case are not present in cyclic structures.

7. Composition according to any of Claims 1 to 3, **characterized in that** the general formula (I) for 50-100 wt% of the amide compound (A) is present in accordance with the general formula (Ib)

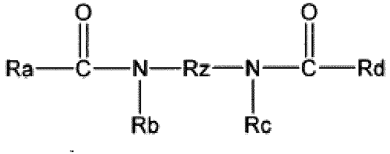

8. Composition according to any of Claims 1, 2, 3, and 7, **characterized in that** the general formula (I) for 50-100 wt% of the amide compound (A) is present in accordance with the general formula (Ib), where Rb and Rc together with the N atom bonded to each of Rb and Rc, and also with the radical Rz, in accordance with the general formula (*γ*-*1*), form a branched or unbranched, saturated or unsaturated cyclic structure having 5 to 7 ring atoms which has not more than two heteroatoms from the group consisting of O and N.

9. Composition according to any of Claims 1, 2, 3, and 7, **characterized in that** the general formula (I) for 50-100 wt% of the amide compound (A) is present in accordance with the general formula (Ib), where Ra and Rb and/or Rc with Rd, together with the CO-N moiety joining Ra to Rb and/or Rc to Rd, in accordance with the general formula (*α*-*1*), together form a branched or unbranched, saturated or unsaturated cyclic structure having 4 to 10 ring atoms which has not more than two heteroatoms from the group consisting of O and N.

10. Composition according to any of Claims 1 to 9, **characterized in that** 70-100 wt% of the urea compound (B) either has at least two urea groups or has at least one urea group and at least one urethane groups.

11. Composition according to any of Claims 1 to 10, **characterized in that** 50-100 wt% of the urea compound (B) is present in accordance with the general formula (II)
R³¹-[R³³-Z-R³⁴-W-]ₙR³² (II)
where
R³¹ and R³² each identically or differently and also each independently of one another are represented by a branched or unbranched, saturated or unsaturated organic radical which contains 1-100 carbon atoms and which has not more than one urea group each and not more than one urethane group each,
R³³ and R³⁴ each identically or differently and also each independently of one another are represented by branched or unbranched polyester radicals containing 1-300 carbon atoms and optionally containing ether groups, branched or unbranched polyether radicals containing 2-300 carbon atoms, branched or unbranched polyamide radicals containing 1-300 carbon atoms, polysiloxane radicals containing 3 to 100 silicon atoms, branched or unbranched C2-C22 alkylene radicals, branched or unbranched C3-C18 alkenylene radicals, C5-C12 arylene radicals and/or branched or unbranched C7-C22 arylalkylene radicals,
Z and W each identically or differently and also each independently of one another are represented by NH-CO-O and/or NH-CO-NH,
n is in each case identical or different and is represented by an integer from 1 to 150, preferably from 2 to 120.

12. Composition according to any of Claims 1 to 11, **characterized in that** 50-100 wt% of the urea compound (B) has in each case a molecular weight of 2000 to 55000 and also 4-150 urea groups.

13. Composition according to any of Claims 1 to 12, **characterized in that** 50-100 wt% of the urea compound (B) is present in each case in accordance with one of the general formulae selected from the group consisting of (IIIa), (IIIb), (IIIc), and (IIId) 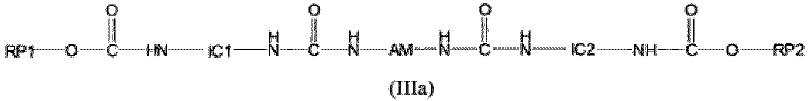 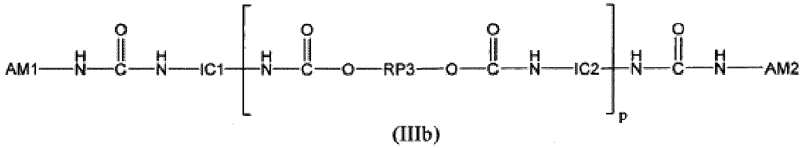 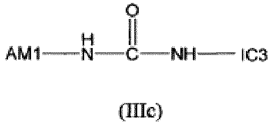 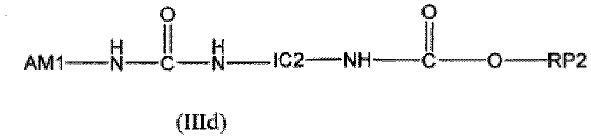 where
AM is identical or different and is represented by a linear or branched, saturated or unsaturated, aliphatic, aromatic or aliphatic-aromatic organic radical having 2 to 50 C atoms,
AM1 and AM2 in each case are identical or different and in each case independently of one another represented by a linear or branched, saturated or unsaturated, aliphatic, aromatic or aliphatic-aromatic organic radical having 1 to 50 C atoms,
IC1 and IC2 are in each case identical or different and in each case independently of one another represented by a linear or branched, saturated or unsaturated, aliphatic, aromatic or aliphatic-aromatic hydrocarbon radical having 2 to 40 C atoms,
IC3 is identical or different and is represented by a linear or branched, saturated or unsaturated, aliphatic, aromatic or aliphatic-aromatic hydrocarbon radical having 2 to 24 carbon atoms,
RP1 and RP2 are in each case identical or different and in each case independently of one another represented by a linear or branched, saturated or unsaturated, aliphatic, aromatic or aliphatic-aromatic organic radical having 1 to 24 C atoms and/or by a polyether radical having 1 to 120 ether oxygen atoms and/or by a polyester radical having 1 to 100 ester groups and optionally containing ether groups, and/or by a polyamide radical having 1 to 100 amide groups, and/or by a polysiloxane radical having 3 to 100 silicon atoms,
RP3 is identical or different and is represented by a linear or branched, saturated or unsaturated, aliphatic, aromatic or aliphatic-aromatic hydrocarbon radical having 2 to 24 C atoms and/or by a (poly)ether radical having 1 to 120 ether oxygen atoms and/or by a polyamide radical having 1 to 100 amide groups and/or by a polysiloxane radical having 3 to 100 silicon atoms and/or by a polyester radical having 1 to 100 ester groups and optionally containing ether groups, and
p is identical or different and is represented by 0 and/or 1.

14. Composition according to claim 13, **characterized in that** 70-100 wt% of the urea compound (B) is present in each case in accordance with one of the general formulae selected from the group consisting of (IIIa), (IIIb), (IIIb), and (IIId), where
AM is identical or different and is selected from the group consisting of 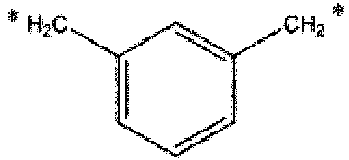 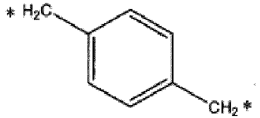 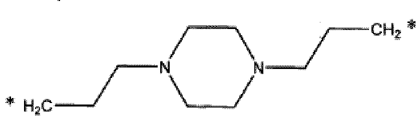 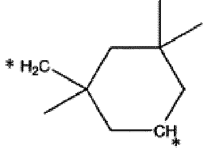 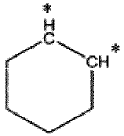 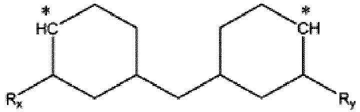 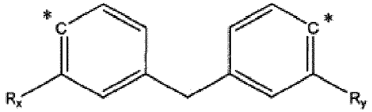 where Rₓ and R_{y} are identical or different and are in each case independently represented by CH₃ and/or hydrogen,
(CH₂)_{q}
where q is identical or different and is represented by an integer from 2 to 12,
AM1 and AM2 are each identical or different and are selected from the group consisting of n-propyl, isopropyl, butyl, isobutyl, tert-butyl, lauryl, oleyl, stearyl, polyisobutylene, and polyethers having 2 to 40 ether oxygen atoms, benzyl, methylbenzyl, cyclohexyl, carboxyalkyl, hydroxyalkyl, and alkylalkoxysilane,
IC1 and IC2 are each identical or different and are selected from the group consisting of 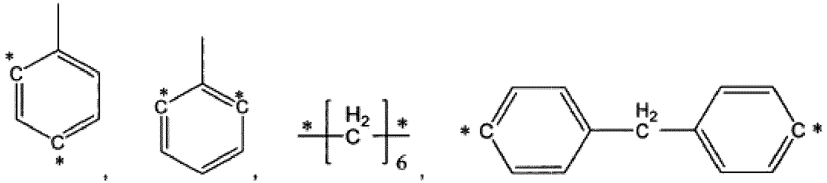 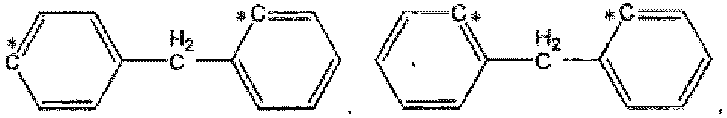 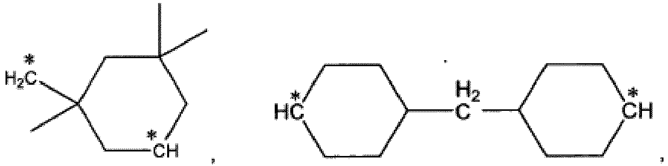 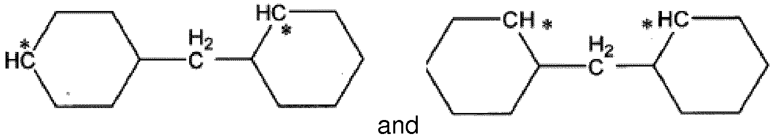 IC3 is identical or different and is selected from the group consisting of methyl, ethyl, phenyl, benzyl, cyclohexyl, and stearyl,
RP1 and RP2 are each identical or different and are selected from the group consisting of branched or unbranched C1 to C18 alkyl, oleyl, benzyl, allyl, polyether radical preferably containing structural units of ethylene oxide, propylene oxide and/or butylene oxide, and polyester radical containing structural units of epsilon-caprolactone and/or delta-valerolactone,
RP3 is identical or different and is selected from the group consisting of linear or branched C1 to C18 alkylene, linear or branched C2 to C18 alkenylene, polyether preferably containing structural units of ethylene oxide, propylene oxide and/or butylene oxide and having 1 to 25 ether oxygen atoms.

15. Composition according to any of Claims 1 to 13, **characterized in that** 70-100 wt% of the urea compound (B) in each case is preparable by reaction of monofunctional amines with isocyanates oligomerized by isocyanurate formation and/or uretdione formation.

16. Composition according to any of Claims 1 to 15, **characterized in that** 95-100 wt%, preferably 98-100 wt%, of the urea compound (B) contains in each case at least
one molecule segment of the general formula (IVa)
-O-CO-NH-Y₁-NH-CO-NH- (IVa)
where
Y₁ is identical or different and is represented by a saturated or unsaturated, branched or unbranched hydrocarbon radical containing 6 to 20 carbon atoms,
and in each case contains no molecule segment of the general formula (IVb)
-O-CO-NH-Y₂NH-CO-O- (IVb)
where
Y₂ is identical or different and is represented by a saturated or unsaturated, branched or unbranched hydrocarbon radical containing 6 to 20 carbon atoms.

17. Composition according to any of Claims 1 to 16, comprising 0.5-4.0 wt% of the ionogenic compound (C), where 50-100 wt% of the ionogenic compound (C) is present in the form of lithium salt or calcium salt, preferably in the form of the chloride, acetate and/or nitrate thereof.

18. Composition according to any of Claims 1 to 17, which is suitable for rheology control, more particularly for thixotroping, of liquid systems.

19. Use of a composition according to any of Claims 1 to 17 for rheology control, more particularly for thixotroping, of a liquid mixture.

20. Use according to Claim 19, **characterized in that** the liquid mixture is present in the form of a coating, more particularly a paint or varnish, a plastics formulation, a pigment paste, a sealant formulation, cosmetics, a ceramic formulation, an adhesive formulation, an encapsulating composition, a drilling mud solution, a building material formulation, a lubricant, a filling compound, a printing ink or a liquid ink.

21. Preparation which is present in the form of a paint or varnish, a plastics formulation, a pigment paste, a sealant formulation, cosmetics, a ceramic formulation, an adhesive formulation, an encapsulating composition, a building material formulation, a lubricant, a drilling mud solution, a filling compound, a printing ink or a liquid ink and to which 0.1 to 7.5 wt% of a composition according to any of Claims 1 to 18 has been added.

## Revendications

1. Composition contenant :
i) 15 à 95 % en poids d'un composé d'amide (A),
ii) 5 à 75 % en poids d'un composé d'urée (B),
iii) 0 à 50 % en poids d'un composé ionogène (C) et
iv) 0 à 35 % en poids d'un solvant organique (D),
le composé d'amide (A) présentant une masse molaire de 70 à 600 g/mol, le composé d'amide (A) contenant au plus un groupe amide à l'atome d'azote duquel un hydrogène est relié, le composé d'amide (A) ne comprenant pas de groupe urée, pas de phosphore, pas de silicium et pas d'halogène, et le composé d'amide (A) se présentant selon la formule générale (I) 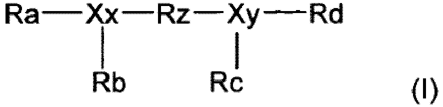 avec
Xx identique ou différent, et représenté par un groupe amide C(=O)-N, qui est relié avec Rz, Ra et Rb selon l'une des formules générales RzC(=O)-NRaRb (Xx1), RaC(=O)-NRzRb (Xx2) et RbC(=O)-NRzRa (Xx3),
Xy identique ou différent, et représenté par un groupe amide C(=O)-N, qui est relié avec Rz, Rc et Rd selon l'une des formules générales RzC(=O)-NRcRd (Xy1), RcC(=O)-NRzRd (Xy2) et RdC(=O)-NRzRc (Xy3),
Rz à chaque fois identique ou différent, et représenté par un radical hydrocarboné ramifié ou non ramifié, saturé ou insaturé, comprenant 1 à 32 atomes de carbone, qui peut contenir exclusivement des groupes amino et/ou amide en tant que groupes contenant des hétéroatomes,
Ra, Rb, Rc, Rd à chaque fois identiques ou différents, et à chaque fois représentés indépendamment les uns des autres par hydrogène et/ou un radical organique ramifié ou non ramifié, saturé ou insaturé, contenant 1 à 16 atomes de carbone, et ce à condition que
Ra, Rb, Rc et Rd comprennent au total au moins 4 atomes de carbone,
au plus un des radicaux du groupe Ra, Rb, Rc et Rd se présente sous la forme d'hydrogène,
Ra et Rb et/ou Rc avec Rd puissent former conjointement ensemble avec le groupe CO-N reliant Ra avec Rb et/ou Rc avec Rd selon la formule générale *(α-1)* un cycle de 4 à 10 atomes de cycle, et/ou 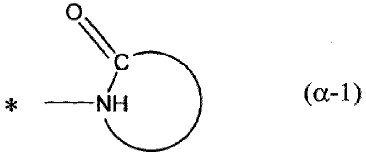
Ra et Rb et/ou Rc avec Rd puissent former conjointement ensemble avec l'atome N reliant Ra avec Rb et/ou Rc avec Rd selon la formule générale (*β-1)* un cycle de 4 à 7 atomes de cycle, ou 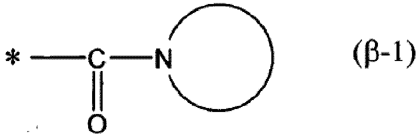
Rb et Rc puissent former conjointement ensemble avec l'atome N relié respectivement à Rb et Rc, ainsi que le radical Rz selon la formule générale *(γ-1)* un cycle de 5 à 7 atomes de cycle 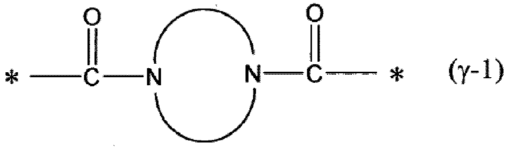
Ra, Rb, Rc, Rd et Rz comprennent au total au plus 36 atomes de carbone, et au plus 8 hétéroatomes du groupe constitué par N et O,
le composé d'urée (B) présente un poids moléculaire d'au moins 350 g/mol et comprenne au moins un groupe urée,
le composé ionogène (C) contienne un composant cationique et un composant anionique, et diffère du composé d'amide (A) et du composé d'urée (B), et
le solvant organique (D) ne contienne pas de groupe urée et pas de groupe ionique, et comprenne au plus deux hétéroatomes choisis dans le groupe constitué par l'azote et l'oxygène.

2. Composition selon la revendication 1, contenant :
i) 30 à 90 % en poids du composé d'amide (A),
ii) 8 à 55 % en poids du composé d'urée (B),
iii) 0 à 15 % en poids du composé ionogène (C) et
iv) 2 à 25 % en poids du solvant organique (D).

3. Composition selon la revendication 1 ou 2, **caractérisée en ce que** d'une part 50 à 100 % en poids du composé d'amide (A) ne comprend pas de groupe amide à l'atome d'azote duquel un hydrogène est relié, et d'autre part ces 50 à 100 % en poids du composé d'amide (A) se présentent par ailleurs selon une formule générale (I) dans laquelle aucun des radicaux du groupe constitué par Ra, Rb, Rc et Rd n'est représenté par l'hydrogène.

4. Composition selon l'une quelconque des revendications 1 à 3, **caractérisée en ce que** 50 à 100 % en poids du composé d'amide (A) se présente selon la formule générale (la)

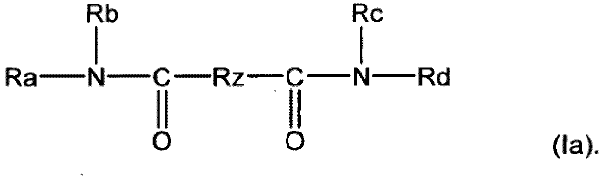

5. Composition selon l'une quelconque des revendications 1 à 4, **caractérisée en ce que** 50 à 100 % en poids du composé d'amide (A) se présente selon la formule générale (Ia), dans laquelle Ra et Rb et/ou Rc avec Rd forment conjointement ensemble avec l'atome N reliant Ra avec Rb et/ou Rc avec Rd selon la formule générale *(β-1)* un cycle de 4 à 7 atomes de cycle ramifié ou non ramifié, saturé ou insaturé, qui comprend au plus deux hétéroatomes du groupe constitué par O et N.

6. Composition selon l'une quelconque des revendications 1 à 4, **caractérisée en ce que** 50 à 100 % en poids du composé d'amide (A) se présente selon la formule générale (la), dans laquelle Ra, Rb, Rc et/ou Rd ne sont à chaque fois pas contenus dans des cycles.

7. Composition selon l'une quelconque des revendications 1 à 3, **caractérisée en ce que** la formule générale (I) se présente pour 50 à 100 % en poids du composé d'amide (A) selon la formule générale (Ib)

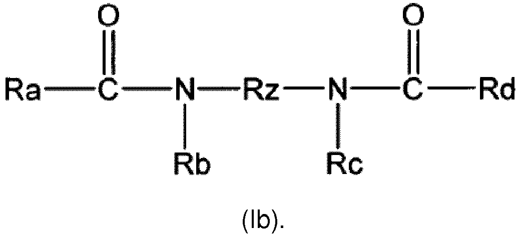

8. Composition selon l'une quelconque des revendications 1, 2, 3 et 7, **caractérisée en ce que** la formule générale (I) se présente pour 50 à 100 % en poids du composé d'amide (A) selon la formule générale (Ib), dans laquelle Rb et Rc forment conjointement ensemble avec l'atome N relié respectivement à Rb et Rc, ainsi que le radical Rz selon la formule générale *(γ-1)* un cycle de 5 à 7 atomes de cycle ramifié ou non ramifié, saturé ou insaturé, qui comprend au plus deux hétéroatomes du groupe constitué par O et N.

9. Composition selon l'une quelconque des revendications 1, 2, 3 et 7, **caractérisée en ce que** la formule générale (I) se présente pour 50 à 100 % en poids du composé d'amide (A) selon la formule générale (Ib), dans laquelle Ra et Rb et/ou Rc avec Rd forment conjointement ensemble avec le groupe CO-N reliant Ra avec Rb et/ou Rc avec Rd selon la formule générale *(α-1)* un cycle de 4 à 10 atomes de cycle ramifié ou non ramifié, saturé ou insaturé, qui comprend au plus deux hétéroatomes du groupe constitué par O et N.

10. Composition selon l'une quelconque des revendications 1 à 9, **caractérisée en ce que** 70 à 100 % en poids du composé d'urée (B) comprend au moins deux groupes urée ou au moins un groupe urée et au moins un groupes uréthane.

11. Composition selon l'une quelconque des revendications 1 à 10, **caractérisée en ce que** 50 à 100 % en poids du composé d'urée (B) se présente selon la formule générale (II)
R³¹-[R³³-Z-R³⁴-W-]ₙR³² (II)
avec
R³¹ et R³² à chaque fois identiques ou différents, et à chaque fois représentés indépendamment l'un de l'autre par un radical organique ramifié ou non ramifié, saturé ou insaturé, contenant 1 à 100 atomes de carbone, qui comprend au plus à chaque fois un groupe urée et au plus à chaque fois un groupe uréthane,
R³³ et R³⁴ à chaque fois identiques ou différents, et à chaque fois représentés indépendamment l'un de l'autre par des radicaux polyester ramifiés ou non ramifiés, contenant 1 à 300 atomes de carbone, contenant éventuellement des groupes éther, des radicaux polyéther ramifiés ou non ramifiés, contenant 2 à 300 atomes de carbone, des radicaux polyamide ramifiés ou non ramifiés, contenant 1 à 300 atomes de carbone, des radicaux polysiloxane contenant 3 à 100 atomes de silicium, des radicaux alkylène en C2-C22 ramifiés ou non ramifiés, des radicaux alcénylène en C3-C18 ramifiés ou non ramifiés, des radicaux arylène en C5-C12 et/ou des radicaux arylalkylène en C7-C22 ramifiés ou non ramifiés,
Z et W à chaque fois identiques ou différents, et à chaque fois représentés indépendamment l'un de l'autre par NH-CO-O et/ou NH-CO-NH,
n à chaque fois identique ou différent, et représenté par un nombre entier de 1 à 150, de préférence de 2 à 120.

12. Composition selon l'une quelconque des revendications 1 à 11, **caractérisée en ce que** 50 à 100 % en poids du composé d'urée (B) présente à chaque fois un poids moléculaire de 2 000 à 55 000, et comprend 4 à 150 groupes urée.

13. Composition selon l'une quelconque des revendications 1 à 12, **caractérisée en ce que** 50 à 100 % en poids du composé d'urée (B) se présente à chaque fois selon l'une des formules générales choisies dans le groupe constitué par (IIIa), (IIIb), (IIIc) et (IIId) 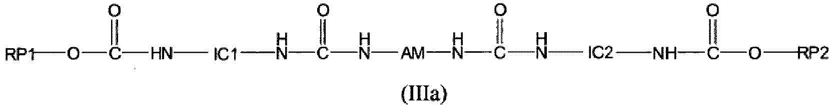 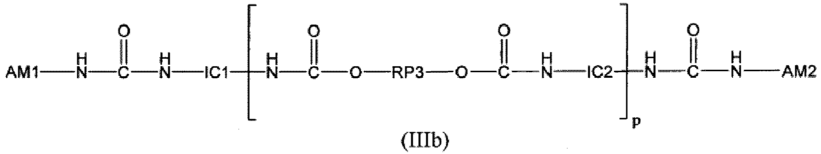 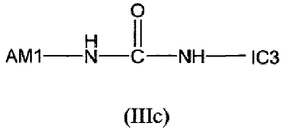 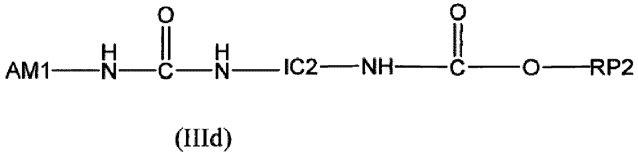 avec
AM identique ou différent, et représenté par un radical organique linéaire ou ramifié, saturé ou insaturé, aliphatique, aromatique ou aliphatique-aromatique de 2 à 50 atomes C,
AM1 et AM2 à chaque fois identiques ou différents, et à chaque fois représentés indépendamment l'un de l'autre par un radical organique linéaire ou ramifié, saturé ou insaturé, aliphatique, aromatique ou aliphatique-aromatique de 1 à 50 atomes C,
IC1 et IC2 à chaque fois identiques ou différents, et à chaque fois représentés indépendamment l'un de l'autre par un radical hydrocarboné linéaire ou ramifié, saturé ou insaturé, aliphatique, aromatique ou aliphatique-aromatique de 2 à 40 atomes C,
IC3 identique ou différent, et représenté par un radical hydrocarboné linéaire ou ramifié, saturé ou insaturé, aliphatique, aromatique ou aliphatique-aromatique de 2 à 24 atomes C,
RP1 et RP2 à chaque fois identiques ou différents, et à chaque fois représentés indépendamment l'un de l'autre par un radical organique linéaire ou ramifié, saturé ou insaturé, aliphatique, aromatique ou aliphatique-aromatique de 1 à 24 atomes C, et/ou par un radical polyéther de 1 à 120 atomes d'oxygène éthérés et/ou par un radical polyester de 1 à 100 groupes ester contenant éventuellement des groupes éther, et/ou par un radical polyamide de 1 à 100 groupes amide, et/ou par un radical polysiloxane de 3 à 100 atomes de silicium,
RP3 identique ou différent, et représenté par un radical hydrocarboné linéaire ou ramifié, saturé ou insaturé, aliphatique, aromatique ou aliphatique-aromatique de 2 à 24 atomes C, et/ou par un radical (poly)éther de 1 à 120 atomes d'oxygène éthérés et/ou par un radical polyamide de 1 à 100 groupes amide, et/ou par un radical polysiloxane de 3 à 100 atomes de silicium, et/ou par un radical polyester de 1 à 100 groupes ester contenant éventuellement des groupes éther, et
p identique ou différent, et représenté par 0 et/ou 1.

14. Composition selon la revendication 13, **caractérisée en ce que** 70 à 100 % en poids du composé d'urée (B) se présente à chaque fois selon l'une des formules générales choisies dans le groupe constitué par (IIIa), (IIIb), (IIIb) et (IIId), dans lesquelles
AM est identique ou différent, et choisi dans le groupe constitué par 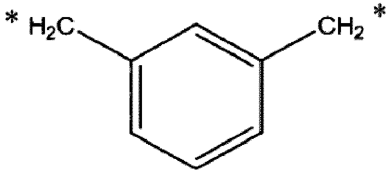 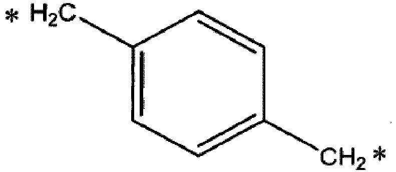 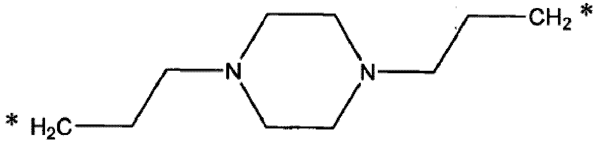 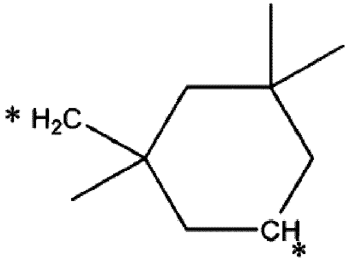 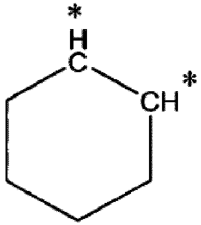 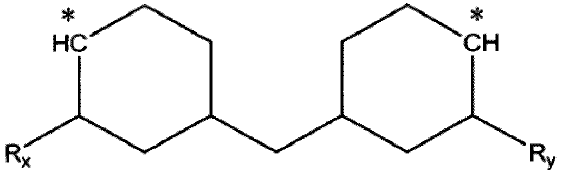 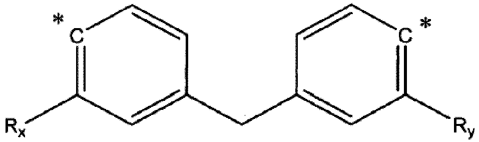 avec Rₓ et R_{y} identiques ou différents, et à chaque fois représentés indépendamment par CH₃ et/ou hydrogène,
(CH₂)_{q}
avec q identique ou différent, et représenté par un nombre entier de 2 à 12, AM1 et AM2 sont à chaque fois identiques ou différents, et choisis dans le groupe constitué par n-propyle, isopropyle, butyle, isobutyle, tert-butyle, lauryle, oléyle, stéaryle, polyisobutylène et polyéther contenant 2 à 40 atomes d'oxygène éthérés, benzyle, méthylbenzyle, cyclohexyle, carboxyalkyle, hydroxyalkyle et alkylalcoxysilane,
IC1 et IC2 sont à chaque fois identiques ou différents, et choisis dans le groupe constitué par : 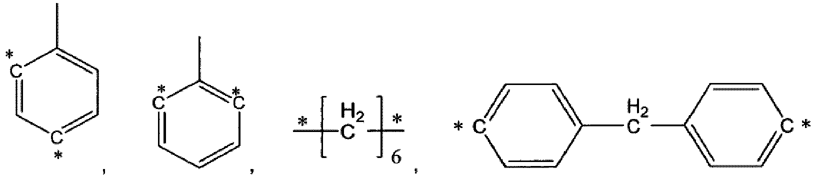 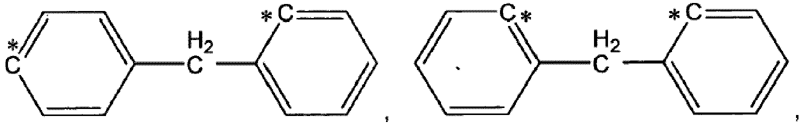 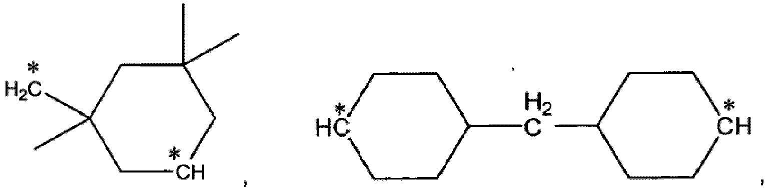 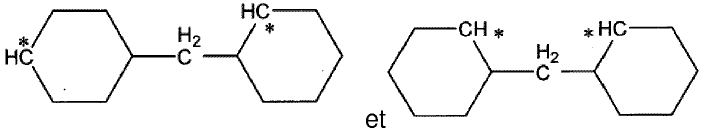 IC3 est identique ou différent, et choisi dans le groupe constitué par méthyle, éthyle, phényle, benzyle, cyclohexyle et stéaryle,
RP1 et RP2 sont à chaque fois identiques ou différents, et choisis dans le groupe constitué par alkyle en C1 à C18 ramifié ou non ramifié, oléyle, benzyle, allyle, de préférence radical polyéther contenant des unités structurales d'oxyde d'éthylène, d'oxyde de propylène et/ou d'oxyde de butylène, et radical polyester contenant des unités structurales d'epsilon-caprolactone et/ou de delta-valérolactone,
RP3 est identique ou différent, et choisi dans le groupe constitué par alkylène en C1 à C18 linéaire ou ramifié, alcénylène en C2 à C18 linéaire ou ramifié, de préférence polyéther contenant des unités structurales d'oxyde d'éthylène, d'oxyde de propylène et/ou d'oxyde de butylène, contenant 1 à 25 atomes d'oxygène éthérés.

15. Composition selon l'une quelconque des revendications 1 à 13, **caractérisée en ce que** 70 à 100 % en poids du composé d'urée (B) peut à chaque fois être fabriqué par mise en réaction d'isocyanates oligomérisés par formation d'isocyanurate et/ou d'uretdione avec des amines monofonctionnelles.

16. Composition selon l'une quelconque des revendications 1 à 15, **caractérisée en ce que** 95 à 100 % en poids, de préférence 98 à 100 % en poids, du composé d'urée (B) contient à chaque fois au moins un segment moléculaire de formule générale (IVa)
-O-CO-N H-Y₁-NH-CO-NH- (IVa)
avec
Y₁ identique ou différent, et représenté par un radical hydrocarboné saturé ou insaturé, ramifié ou non ramifié, contenant 6 à 20 atomes de carbone, et à chaque fois aucun segment moléculaire de formule générale (IVb)
-O-CO-NH-Y₂-NH-CO-O- (IVb)
avec
Y₂ identique ou différent, et représenté par un radical hydrocarboné saturé ou insaturé, ramifié ou non ramifié, contenant 6 à 20 atomes de carbone.

17. Composition selon l'une quelconque des revendications 1 à 16, contenant 0,5 à 4,0 % en poids du composé ionogène (C), 50 à 100 % en poids du composé ionogène (C) se présentant sous la forme d'un sel de lithium ou de calcium, de préférence sous la forme de son chlorure, acétate et/ou nitrate.

18. Composition selon l'une quelconque des revendications 1 à 17, qui est appropriée pour l'ajustement de la rhéologie, notamment pour la thixotropication, de systèmes liquides.

19. Utilisation d'une composition selon l'une quelconque des revendications 1 à 17 pour l'ajustement de la rhéologie, notamment pour la thixotropication, d'un mélange liquide.

20. Utilisation selon la revendication 19, **caractérisée en ce que** le mélange liquide se présente sous la forme d'un revêtement, notamment sous la forme d'un vernis, sous la forme d'une formulation de plastique, sous la forme d'une pâte de pigment, sous la forme d'une formulation d'agent d'étanchéité, sous la forme d'un produit cosmétique, sous la forme d'une formulation de céramique, sous la forme d'une formulation d'adhésif, sous la forme d'une masse de scellement, sous la forme d'une solution de fluide de forage, sous la forme d'une formulation de matériau de construction, sous la forme d'un lubrifiant, sous la forme d'un enduit, sous la forme d'une encre d'impression ou sous la forme d'une encre.

21. Préparation, qui se présente sous la forme d'un vernis, sous la forme d'une formulation de plastique, sous la forme d'une pâte de pigment, sous la forme d'une formulation d'agent d'étanchéité, sous la forme d'un produit cosmétique, sous la forme d'une formulation de céramique, sous la forme d'une formulation d'adhésif, sous la forme d'une masse de scellement, sous la forme d'une formulation de matériau de construction, sous la forme d'un lubrifiant, sous la forme d'une solution de fluide de forage, sous la forme d'un enduit, sous la forme d'une encre d'impression ou sous la forme d'une encre, et à laquelle 0,1 à 7,5 % en poids d'une composition selon l'une quelconque des revendications 1 à 18 a été ajoutée.
